# EUROPEAN PATENT SPECIFICATION

(11) **EP 4 480 682 B1**
(45) Date of publication and mention of the grant of the patent: **15.04.2026**
(21) Application number: 24201846.3
(22) Date of filing: 24.08.2020
(51) Int. Cl.: A63B 53/04, B23P 17/00, B22C 9/06, B22C 9/08, B22C 9/24, B22D 17/22, B29C 45/00, B29C 45/33, B29C 45/44, B29C 69/00

(54) **METHOD OF FORMING A GOLF CLUB HEAD**
VERFAHREN ZUR HERSTELLUNG EINES GOLFSCHLÄGERKOPFES
PROCÉDÉ DE FORMATION D'UNE TÊTE DE CLUB DE GOLF

(30) Priority: 23.08.2019 US 201962891158 P; 26.11.2019 US 201962940799 P
(43) Date of publication of application: 25.12.2024
(62) Divisional of application: 20858939.0
(73) Proprietor: Karsten Manufacturing Corporation, Phoenix, AZ 85029 (US)
(72) Inventor: SPACKMAN, Clayson C., Phoenix 85029 (US); POPE, Jeremy S., Phoenix 85029 (US); MACMILLAN, Rick D., Phoenix 85029 (US); SOLESBEE, Rick A., Phoenix 85029 (US); BRYANT, Les J., Phoenix 85029 (US); BACON, Cory S., Phoenix 85029 (US)
(74) Representative: Tombling, Adrian George

(56) References cited:
- WO-A1-2008/124363
- US-A1- 2008 139 339
- US-A1- 2010 048 325
- US-A1- 2017 340 932
- US-B2- 7 959 522

## Description

### FIELD

The present disclosure relates generally to golf equipment, and more particularly, to methods to manufacture composite golf club head components.

### BACKGROUND

Typically, a golf club head may be formed primarily from a metal material. In some cases, a golf club head may be formed from a composite material including a polymeric resin and a reinforcing fiber. The reinforcing fiber can be provided in sheets. The sheets can be preimpregnated with a polymeric resin. Sometimes the sheets are first formed into the desired shape and then impregnated with the polymeric resin. These fiber-impregnated sheets can only be formed into simple shapes, such as a crown insert or a sole insert. The sheets cannot easily be formed into unique shapes such as hosel geometries or parts that wrap over the skirt of the club head. There is a need in the art for the ability to manufacture composite (or plastic) components of clubs with intricate geometries.

US 2008/139339 A1 discloses a golf club head with a strength-enhanced rear body. The golf club head comprises a front body, a rear body and at least one supporting member. The front body comprises a face and a plurality of abutting edges. The rear body comprises a crown, a ribbon and a plurality of abutting edges, with the rear body being made of a nonmetal material having a specific gravity lower than that of the front body, and the abutting edges of the rear body being corresponding to and connecting with those of the front body. The at least one supporting member being made of a light alloy is disposed along a border between the crown and the ribbon of the rear body. The golf club head of does not comprise the combination of a sole extension having a width ranging from 25% to 85% of the maximum club head width, a weight channel positioned within the sole extension, and a wrap-around component formed from a composite material having fibers aligned in a front-to-rear direction.

### BRIEF DESCRIPTION OF THE DRAWINGS

FIG. 1 shows a perspective view of a golf club head, according to one embodiment.
FIG. 2 shows a sole (or bottom) view of the golf club head of FIG. 1.
FIG. 3 shows a cross sectional, toe-side view of the golf club head of FIG. 1, along the dotted line in FIG. 2.
FIG. 4 shows a rear view of a main component, according to one embodiment.
FIG. 5 shows a crown (or top) view of the main component of FIG. 4.
FIG. 6 shows a sole (or bottom) view of the main component of FIG. 4.
FIG. 7 shows a sole (or bottom) view of a golf club head, according to a second embodiment.
FIG. 8 shows a sole (or bottom) view of a golf club head, according to a third embodiment.
FIG. 9A shows a front view of a wrap-around component, according to one embodiment.
FIG. 9B shows a front view of a wrap-around component, according to an alternate embodiment.
FIG. 10 shows a rear view of the wrap-around component of FIG. 9A.
FIG. 11 shows a heel-side view of the wrap-around component of FIG. 9A.
FIG. 12 shows a toe-side view of the wrap-around component of FIG. 9A.
FIG. 13 shows a bottom view of the wrap-around component of FIG. 9A.
FIG. 14 shows an exploded, perspective view of the wrap-around component of FIG. 9A being assembled onto the main component of FIG. 4 to form the golf club head of FIG. 1.
FIG. 15 shows a method of manufacturing a golf club head, according to one embodiment.
FIG. 16 shows a bottom view of a top mold half of a mold, according to one embodiment.
FIG. 17 shows a top perspective view of a bottom mold half of a mold, according to one embodiment.
FIG. 18 shows a top view of the bottom mold half of FIG. 17.
FIG. 19 shows a top view of the top mold half of FIG. 16.
FIG. 20 shows a front view of an assembly of the bottom mold half of FIG. 17 and the top mold half of FIG. 16.
FIG. 21 shows a top perspective view of a mold slide and lock.
FIG. 22 shows a top perspective view of an assembly of the bottom mold half of FIG. 17 and the slide and lock of FIG. 21.
FIG. 23 shows a top perspective view of an assembly of the bottom mold half of FIG. 17, the top mold half of FIG. 16, and the slide and lock of FIG. 21.
FIG. 24 shows a top perspective view of an assembly of the bottom mold half of FIG. 17, the slide and lock of FIG. 21, and an injection molded wrap-around component, similar to the wrap-around component of FIG. 9.
FIG. 25 shows a schematic of an injection molding compression screw.
FIG. 26 shows a top view of a mold pathline simulation (flow direction of material) at a first stage in time.
FIG. 27 shows a top view of a mold pathline simulation (flow direction of material) at a second stage in time.
FIG. 28 shows a top view of a mold pathline simulation (flow direction of material) at a third stage in time.
FIG. 29 shows a top view of a mold pathline simulation (flow direction of material) at a fourth stage in time.
FIG. 30 shows a top view of a mold fill simulation at a first stage in time.
FIG. 31 shows a top view of a mold fill simulation at a second stage in time.
FIG. 32 shows a top view of a mold fill simulation at a third stage in time.
FIG. 33 shows a top view of a mold fill simulation at a fourth stage in time.
FIG. 34 shows a top view of a mold pathline simulation (flow direction of material) for the wrap-around component of FIG. 9A.

### DESCRIPTION

The invention is as defined in the appended claims.

Described herein is a golf club head having an injection molded wrap-around component that has high strength and low weight. The golf club head is formed of a metallic front component and a composite rear wrap-around component. In addition to forming the striking face, the main component has an extension that stretches rearwards along the sole. The low-density composite piece can slide or cap over the main component to reduce the weight of upper and rear portions of the club head. The single composite piece forms the majority of the crown and also wraps around a skirt of the club to form portions of the sole. The composite wrap-around component is injection molded from a gate at a rear peripheral edge of the crown. The wrap-around component can comprise thickened regions, which act as flow leaders or highways for distributing the molten composite material to the extremities of the mold during injection molding. The wrap-around component can be formed from a polymeric composite material.

The golf club head can be created by a method that produces a strong and flexible striking face coupled with a lightweight and durable rear crown and toe and heel sole sections. The wrap-around component that forms the rear crown and portions of the sole can be injection molded. The injection molding process, enabled by the geometry of the wrap-around component, creates a component of high strength and low weight. Furthermore, the injection molding process can reduce production times. Forming portions of the crown and sole from a composite material can improve the acoustic response of the golf club head upon impact with a golf ball.

The terms "comprise(s)," "include(s)," "having," "has," "can," "contain(s)," and variants thereof, as used herein are intended to be open-ended transitional phrases, terms or words that do not preclude the possibility of additional acts or structures. The singular forms "a," "and" and "the" include plural references unless the context clearly dictates otherwise. The present disclosure also contemplates other embodiments "comprising," "consisting of" and "consisting essentially of" the embodiments or elements presented herein, whether explicitly set forth or not.

The modifier "about," "approximately," or "roughly" used in connection with a quantity is inclusive of the stated value and has the meaning dictated by the context (for example, it includes at least the degree of error associated with the measurement of the particular quantity). The modifier "about," "approximately," or "roughly" should also be considered as disclosing the range defined by the absolute values of the two endpoints. For example, the expression "from about 2 to about 4" also discloses the range "from 2 to 4." The term "about," "approximately," or "roughly" may refer to plus or minus 10% of the indicated number. For example, "about 10%" may indicate a range of 9% to 11%, and "about 1" may mean from 0.9-1.1. Other meanings of "about," "approximately," or "roughly" may be apparent from the context.

"Sole" as used herein may mean the bottom surface or portion of a golf club head when it is set at address. The sole may not be visible from a top or crown view of the golf club head.

"Crown" as used herein may mean the top surface or portion of a golf club head when it is set at address. The crown may not be visible from a bottom or sole view of the golf club head.

"Injection molding" as used herein may mean a process of heating a polymeric material or a composite material, pressing said polymeric or composite material into a mold, cooling the material within the mold to form a solid part, and ejecting the solid part from the mold.

"Mold" as used herein may mean two or more metal pieces that together form a cavity. The cavity may be in the shape of a desired product or component, such as a component of a golf club head. The mold may include a gate or other paths for material to flow through that are not included in the cavity. The mold may include cooling lines that allow coolant to flow through the mold.

"Top mold half" as used herein may mean a first, upper section of a mold. "Bottom mold half" as used herein may mean a second, lower section of a mold. The top mold half is configured to pull, lift, or otherwise move away from the bottom mold half when the part is ejected from the mold.

"Springback" as used herein may mean a warping phenomenon that occurs with some injection molded parts when they are ejected from the mold. If an inner surface of a part has a different surface area than an outer surface of the part, the part can warp when it is ejected from the mold. The compressive stresses on the larger surface (typically the outer surface) can overdo the compressive stresses on the smaller surface (typically the inner surface), causing the part to warp.

"Shrink rate" as used herein may mean the amount which a material shrinks after it is ejected from a mold in an injection molding process. Shrink rate is related to the properties of the material that is used in the injection molding process. Unlike springback, the shrink rate is not dependent on or affected greatly by the part geometry.

"Pathlines" as used herein may mean the simulated or actual direction that a material can flow. Pathlines in simulations can also represent the speed at which the material fills regions of the mold. Pathlines can indicate or represent the direction and/or speed of fill during an injection molding process. A higher density of pathlines within a portion of the mold may represent the portion of the mold that will fill first.

"Gate" as used herein may mean a mouth of a mold used in injection molding. During an injection molding process, the material enters the mold first through the gate. In some embodiments, "gate" may also refer to the injected molded material that was within the gate of the mold before ejection of the part from the mold.

"Flow leaders" as used herein may mean channels, areas of increased thickness, and/or paths for material to flow along or through during an injection molding process. Flow leaders can span from a gate towards other regions of the club head. Flow leaders can be angled towards areas of the mold that would otherwise be challenging for the material to reach.

"Weld line" as used herein may mean a line at which two separate material flows intersect or connect. The weld line may mean a low-strength seam which is formed within a mold during an injection molding process.

"Freeze off thickness" as used herein may mean the minimum thickness at which a material can successfully flow. A mold designed for injection molding must be designed so that all regions of the mold comprise a thickness equal to or greater than the freeze off thickness.

"Cycle time" as used herein may mean the amount of time to injection mold a single part during an injection molding process.

### I) Golf Club Head with Wrap-around Component

The golf club head 10 described herein comprises a main component 60 that is generally metal and a wrap-around component 100 that is composite. The composite material can be injection molded to form the lightweight wrap-around component 100. The wrap-around component 100 can comprise a thin crown section 110, to reduce the weight of the crown 16 compared to a conventional metal golf club head. The wrap-around component 100 can also comprise heel and toe wings 150, 130 that form parts of the sole 18, to reduce the weight of the sole 18, thus directing the center of gravity rearwards. The metallic main component 60 comprises a rear extension 72 that supports a weight channel or port 82 for securing a weight 84 at the rear end 14 of the club head 10. The combination of the metallic main component 60 and the composite wrap-around component 100 forms a club head 10 with a low and rear located center of gravity, a high moment of inertia, and a reduced spin, launch, and forgiveness benefits over club heads lacking the composite wrap-around component feature. Furthermore, forming the high strength, low weight wrap-around component requires a particular mold design and manufacturing method, as described below.

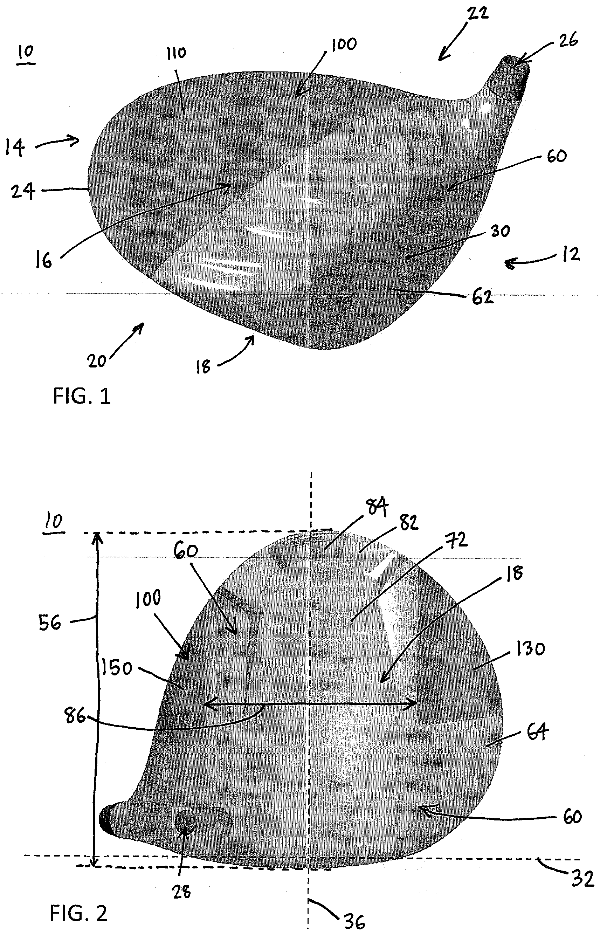

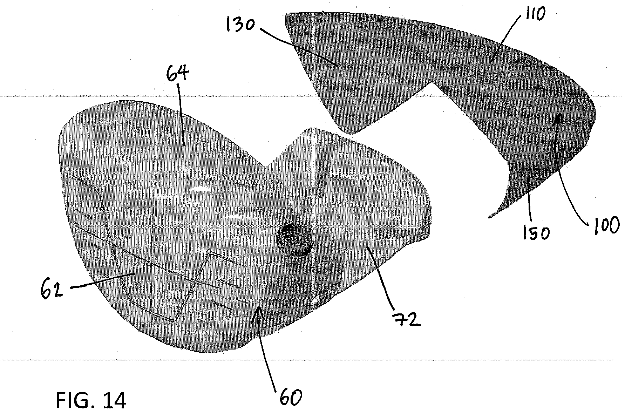

Referring to FIGS. 1-3 and 14, the golf club head 10 described herein comprises a front end 12, a rear end 14, a crown 16, a sole 18, a skirt 24 connecting the crown 16 to the sole 18, a toe end 20, and a heel end 22. The golf club head 10 comprises the main component 60 that forms a strikeface 62 at the golf club head front end 12. The main component 60 can further form a return 64 that extends rearward from the strikeface 62, forming a portion of the sole 18 and a portion of the crown 16. The main component 60 further comprises a sole extension 72, connected to a sole portion of the return 64. The sole extension 72 reaches or extends from the return 64 to the rear end 14 of the golf club head 10. In accordance with the claimed invention, the sole extension 72 comprises a weight port or weight channel 82 for receiving a weight 84. The main component 60 can comprise a lip 80 that runs along a rear edge 66 of the return 64 and along edges 74, 76 of the sole extension 72.

The golf club head 10 further comprises the wrap-around component 100 that forms the remainder of the golf club head 10 that is not formed by the main component 60. The wrap-around component 100 forms portions of both the crown 16 and the sole 18 of the golf club head 10. The wrap-around component 100 can comprise a crown section 110, a toe wing 130, and a heel wing 150. The crown section 110 of the wrap-around component forms 100 a central and rear portion of the crown 16 of the club head 10. The toe wing 130 of the wrap-around component 100 extends from the crown section 110, around the skirt 24, and into the sole 18. The toe wing 130 forms a section of the toe end 20 of the club head 10. Similarly, the heel wing 150 of the wrap-around component 100 extends from the crown section 110 opposite the toe wing 130, around the skirt 24, and into the sole 18. The heel wing 150 forms a section of the toe end 20 of the club head 10. The wrap-around component 100 can comprise a lip (not shown) that is configured to engage the main component lip 80. In the assembled club head 10, the overlapping of the lips forms a lap joint structure that allows the wrap-around component 100 to bond the main component 60.

### a. Coordinate System

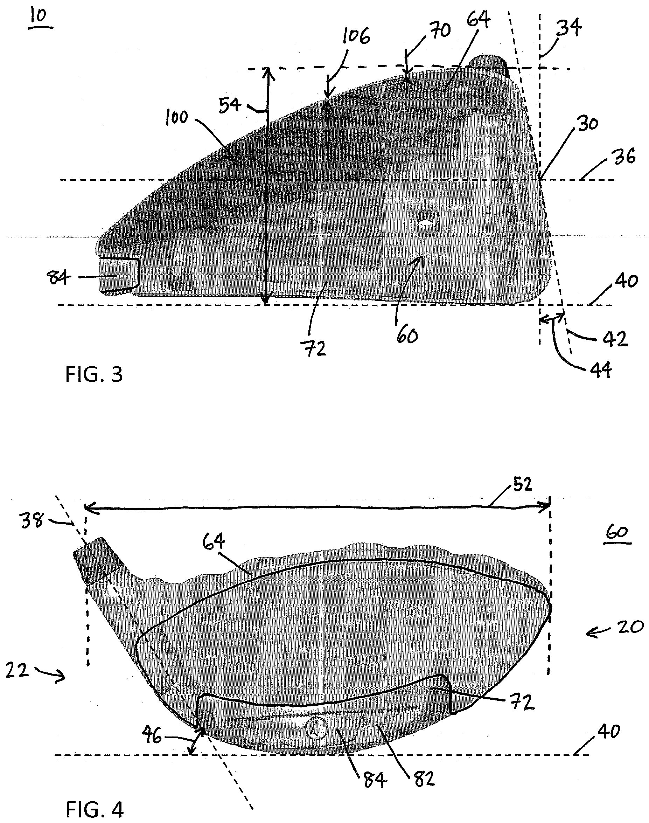

Referring to FIGS 2 and 3, a coordinate system may be defined with an origin 30 at the strikeface center of the strikeface 62, the coordinate system having an X-axis 32, a Y-axis 34, and a Z-axis 36. The X-axis 32 is a horizontal axis that extends through the striking face center of the strikeface 62 in a direction from the heel end 22 to the toe end 20 of the golf club head 10, and parallel to a ground plane 40 when the club head 10 is at address. The Y-axis 34 is a vertical axis that extends through the striking face center 30 of the strikeface 62 in a direction from the crown 16 to the sole 18 of the golf club head 10, and perpendicular to the X-axis 32, and the Z-axis 36 extends through the strikeface center 30 in a direction from the strikeface to the rear end 14 of the golf club head 10 and perpendicular to the X-axis and the Y-axis.

The coordinate system defines an XY plane extending through the X-axis 32 and the Y-axis 34, an XZ plane extending through the X-axis 32 and the Z-axis 36, and a YZ plane extending through the Y-axis 34 and the Z-axis 36, wherein the XY plane, the XZ plane, and the YZ plane are all perpendicular to one another and intersect at the origin 30 of the coordinate system at the strikeface center. A loft plane 42 is tangent to the strikeface 62 at the origin 30. The loft plane 42 is angled from the XY plane by a loft angle 44, when viewed perpendicular to the YZ plane.

In some embodiments, particularly when the golf club head 10 is a driver, the loft angle 44 of the club head 10 is less than approximately 16 degrees, less than approximately 15 degrees, less than approximately 14 degrees, less than approximately 13 degrees, less than approximately 12 degrees, less than approximately 11 degrees, or less than approximately 10 degrees.

In some embodiments, particularly when the golf club head 10 is a fairway wood, the loft angle 44 of the club head 10 is less than approximately 35 degrees, less than approximately 34 degrees, less than approximately 33 degrees, less than approximately 32 degrees, less than approximately 31 degrees, or less than approximately 30 degrees. Further, in many embodiments, the loft angle 44 of the club head 10 is greater than approximately 12 degrees, greater than approximately 13 degrees, greater than approximately 14 degrees, greater than approximately 15 degrees, greater than approximately 16 degrees, greater than approximately 17 degrees, greater than approximately 18 degrees, greater than approximately 19 degrees, or greater than approximately 20 degrees. For example, in some embodiments, the loft angle of the club head can be between 12 degrees and 35 degrees, between 15 degrees and 35 degrees, between 20 degrees and 35 degrees, or between 12 degrees and 30 degrees.

In some embodiments, particularly when the golf club head 10 is a hybrid, the loft angle 44 of the club head 10 is less than approximately 40 degrees, less than approximately 39 degrees, less than approximately 38 degrees, less than approximately 37 degrees, less than approximately 36 degrees, less than approximately 35 degrees, less than approximately 34 degrees, less than approximately 33 degrees, less than approximately 32 degrees, less than approximately 31 degrees, or less than approximately 30 degrees. Further, in many embodiments, the loft angle of the club head is greater than approximately 16 degrees, greater than approximately 17 degrees, greater than approximately 18 degrees, greater than approximately 19 degrees, greater than approximately 20 degrees, greater than approximately 21 degrees, greater than approximately 22 degrees, greater than approximately 23 degrees, greater than approximately 24 degrees, or greater than approximately 25 degrees.

Furthermore, referring to FIG. 4, a hosel axis 38 is inclined from the X-axis 32 at a predetermined angle, called the lie angle 46, when viewed from a direction perpendicular to the XY plane. The hosel axis 38 can be inclined from the X-axis 23 by a lie angle 46 of between 54 degrees to 65 degrees, inclusively.

The length 52 of the club head 10 can be measured as the furthest extent of the club head 10 from the heel end 22 to the toe end 20, in a direction parallel to the X-axis 32, when viewed from the front view. In many embodiments, the length 52 of the club head 10 can be measured according to a golf governing body such as the United States Golf Association (USGA). For example, the length of the club head can be determined in accordance with the USGA's Procedure for Measuring the Club Head Size of Wood Clubs (USGA-TPX3003, Rev. 1.0.0, November 21, 2003) (available at https://www.usga.org/content/dam/usga/pdf/Equipment/TPX3003-procedure-for-measuring-the-club-head-size-of-wood-clubs.pdf) (the "Procedure for Measuring the Club Head Size of Wood Clubs"). The maximum club head length can range between 7.62 to 12.7 cm (3 to 5 inches).

The height 54 of the club head 10 can be measured as the furthest extend of the club head 10 from the crown 16 to the sole 18, in a direction parallel to the Y-axis 34, when viewed from the front view. In many embodiments, the height 54 of the club head 10 can be measured according to a golf governing body such as the United States Golf Association (USGA). For example, the height of the club head can be determined in accordance with the USGA's Procedure for Measuring the Club Head Size of Wood Clubs (USGA-TPX3003, Rev. 1.0.0, November 21, 2003) (available at https://www.usga.org/content/dam/usga/pdf/Equipment/TPX3003-procedure-for-measuring-the-club-head-size-of-wood-clubs.pdf) (the "Procedure for Measuring the Club Head Size of Wood Clubs"). The maximum club head height can range between 5.08 to 7.112 cm (2 to 2.8 inches).

The depth 56 of the golf club head 10 can be measured as the furthest extent of the club head 10 from the front end 12 to the rear end 14, in a direction parallel to the Z-axis 36, when viewed from the top view. The club head depth 56 can range between 5.08 cm (2 inches) and 12.7 cm (5 inches). The volume of the club head 10 can be measured by submerging the club head 10 into a fluid and measuring the volume of the displaced fluid. In many embodiments, the volume of the club head 10 can be measured according to a golf governing body such as the United States Golf Association (USGA). For example, the volume of the club head can be determined in accordance with the USGA's Procedure for Measuring the Club Head Size of Wood Clubs (USGA-TPX3003, Rev. 1.0.0, November 21, 2003) (available at https://www.usga.org/content/dam/usga/pdf/Equipment/TPX3003-procedure-for-measuring-the-club-head-size-of-wood-clubs.pdf) (the "Procedure for Measuring the Club Head Size of Wood Clubs").

The volume of the club head 10 (i.e. the volume contained by the outermost surfaces of the club head) can range between 200 cc and 800cc. In some embodiments, particularly when the golf club head is a driver, the volume of the club head is greater than approximately 400 cc, greater than approximately 425 cc, greater than approximately 450 cc, greater than approximately 475 cc, greater than approximately 500 cc, greater than approximately 525 cc, greater than approximately 550 cc, greater than approximately 575 cc, greater than approximately 600 cc, greater than approximately 625 cc, greater than approximately 650 cc, greater than approximately 675 cc, or greater than approximately 700 cc. In some embodiments, the volume of the club head can be approximately 400cc - 600cc, 425cc - 500cc, approximately 500cc - 600cc, approximately 500cc - 650cc, approximately 550cc - 700cc, approximately 600cc - 650cc, approximately 600cc - 700cc, or approximately 600cc - 800cc.

In some embodiments, particularly when the golf club head is a fairway wood, the volume of the club head 10 is less than approximately 400 cc, less than approximately 375 cc, less than approximately 350 cc, less than approximately 325 cc, less than approximately 300 cc, less than approximately 275 cc, less than approximately 250 cc, less than approximately 225 cc, or less than approximately 200 cc. In some embodiments, the volume of the club head can be approximately 150cc - 200cc, approximately 150cc - 250cc, approximately 150cc - 300cc, approximately 150cc - 350cc, approximately 150cc - 400cc, approximately 300cc - 400cc, approximately 325cc - 400cc, approximately 350cc - 400cc, approximately 250cc - 400cc, approximately 250 - 350 cc, or approximately 275-375 cc.

In some embodiments, particularly when the golf club head is a hybrid, the volume of the club head 10 is less than approximately 200 cc, less than approximately 175 cc, less than approximately 150 cc, less than approximately 125 cc, less than approximately 100 cc, or less than approximately 75 cc. In some embodiments, the volume of the club head can be approximately 100cc - 150cc, approximately 75cc - 150cc, approximately 100cc - 125cc, or approximately 75cc - 125cc.

### b. Main Component

The golf club head 10 comprises the main component 60 and the wrap-around component 100. The main component 60 is metallic and assumes approximately a T-shape when viewed from a crown or sole view. The trunk or base of the T-shape is formed by a sole extension 72 which both concentrates weight to the central sole and supports a weight channel or port 82 that secures a weight 84 at the rear end 14 of the golf club head 10. The top of the T-shape comprises the strikeface 62 and a face return 64 that forms a front end 12 of the club head 10. The metallic main component 60 makes the club head 10 durable to withstand impact and contributes to the desired weighting properties of the club head 10, namely a low and rear located center of gravity and forgiveness.

As illustrated in FIGS. 4-6, the main component 60 can comprise a strikeface 62, a return 64, and a sole extension 72. The strikeface 62 is located at the front end 12 of the golf club head 10. The strikeface 62 is tangent to the loft plane 42, making it angled from the XY plane when the golf club head 10 is at address. The strikeface 62 can be formed from a faceplate that is secured into a front cavity (not shown) of a body piece to together form the main component 60. In other embodiments, the main component strikeface 62 and return 64 are integrally formed as one unit. The main component 60 can further comprise an upper hosel aperture 26 for receiving a shaft or for receiving a hosel sleeve. In some embodiments, the main component 60 can further include a lower hosel aperture or port 28 located on the sole portion of the extension 72. In these embodiments, the lower hosel aperture 28 can be used for securing a hosel sleeve with a fastener.

The return 64 of the main component 60 extends rearward from the strikeface 62. The return 64 forms a portion of the crown 16, the sole 18, the toe end 20, and the heel end 22. The return 64 can comprise a depth 68, measured orthogonal to the XY plane. A ratio of the return depth 68 to the club head depth 56 can be between 0.20 and 0.75. In some embodiments the ratio of return depth 68 to club head depth 56 can be between 0.20 and 0.30, 0.20 and 0.35, 0.20 and 0.40, 0.20 and 0.45, or 0.20 and 0.50. In some embodiments, the return 64 can have a depth 68 that varies depending on where it is measured. For example, the return depth 68 can be greater adjacent the toe end 20 than it is adjacent the heel end 22. A variable return depth 68 can allow one or both of the heel end 22 and toe end 20 to be weighted more than a center, to increase the forgiveness of the club head 10.

Referring to FIG. 3, the return 64 can comprise a thickness 70 that ranges from 0.0381 cm (0.015 inch) to 0.1016 cm (0.040 inch). In other embodiments, the return thickness 70 can range from 0.0254 cm (0.010 inch) to 0.1016 cm (0.040 inch), 0.0254 cm (0.010 inch) to 0.0508 cm (0.020 inch), 0.0381 cm (0.015 inch) to 0.0635 cm (0.025 inch), 0.0508 cm (0.020 inch) to 0.0762 cm (0.030 inch), 0.0635 cm (0.025 inch) to 0.0889 cm (0.035 inch), 0.0762 cm (0.030 inch) to 0.1016 cm (0.040 inch), 0.1016 cm (0.040 inch) to 0.254 cm (0.10 inch), or 0.254 cm (0.10 inch) to 0.635 cm (0.25 inch). For example, the return thickness 70 can be 0.0254 cm (0.010 inch), 0.0381 cm (0.015 inch), 0.0508 cm (0.020 inch), 0.0635 cm (0.025 inch), 0.0762 cm (0.030 inch), 0.0889 cm (0.035 inch), or 0.1016 cm (0.040 inch).

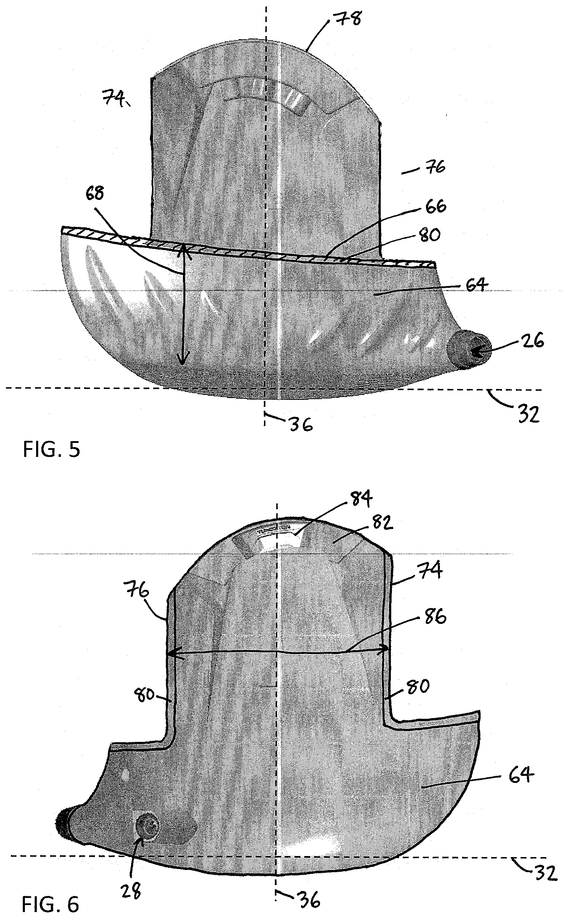

Referring to FIGS. 5 and 6, the sole extension 72 stretches from the return 64 to the rear end 14 of the club head 10. The sole extension 72 further comprise a weight channel 82 adjacent the rear end 14. The sole extension 72 can comprise a width 86, measured parallel to the X-axis 32, from a first edge 74 to a second edge 76 of the sole extension 72. In some embodiments, the width 86 of the extension 72 is uniform, but in other embodiments the width 86 of the extension varies depending on where the width 86 is measured. The sole extension width 86 is less than the length 52 of the golf club head 10. (The sole extension width 86 and club head length 52 are both measured heel-to-toe.) The sole extension width 86 has a range from 25% to 85% of the maximum club head width. The sole extension width 86 may be 25%, 30%, 35%, 40%, 45%, 50%, 55%, 60%, 65%, 70%, 75%, 80% or 85% of the maximum club head length 52. In some embodiments, the sole extension width 86 can range from 1.016 cm (0.4 inch) to 6.35 cm (2.5 inches). A smaller sole extension width 86 means less metal material is used to make the sole extension 72, lowering the weight of the main component 60. Giving the main component 60 a lower weight allows increases discretionary mass that can be reallocated into desired positions on the club head 10 to increase forgiveness and/or position the center of gravity in a low and rearward position. However, a greater sole extension width 86 provides more structural support to the rear weight channel or port 82, increasing the durability of the club head 10. Therefore, the width 86 of the sole extension can be selected to correspond to the desired weighting arrangement for the club head 10.

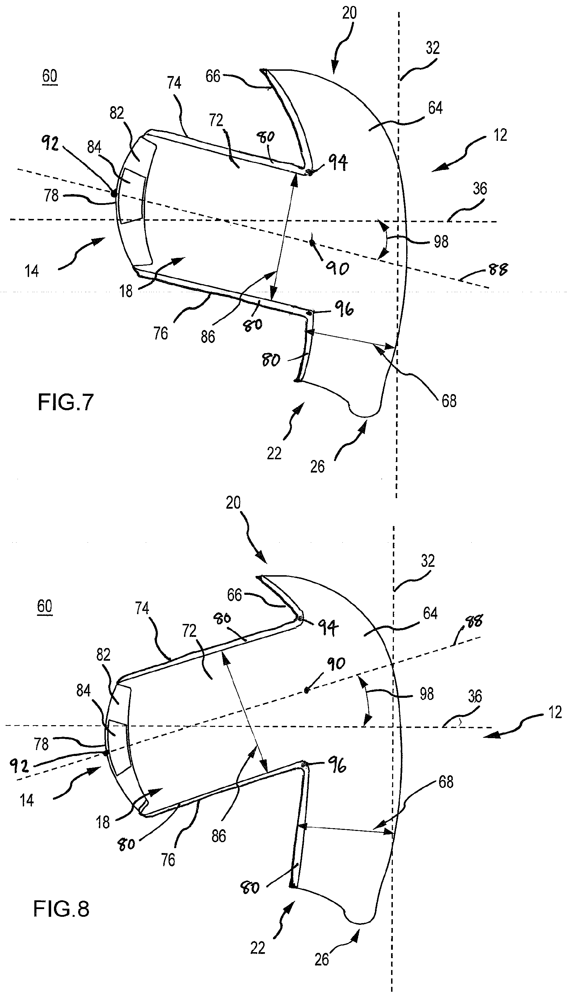

Referring to FIGS. 7 and 8, a sole extension axis 88 approximates a center of the sole extension 72. The extension axis 88 extends between a front midpoint 90 and a rear midpoint 92 of the sole extension 72. The front midpoint 90 is located centrally between a first and second intersection point 94, 96. The first and second intersection points 94, 96 are the located where the edges 74, 76 of the sole extension 72 connect to the return 64. The rear midpoint 92 is located centrally along a rear or perimeter edge 78 of the sole extension 72.

The sole extension 72 can comprise a length (not shown), measured parallel to the Z-axis 36, from the return 64 of the main component 60 to the rear end 14 of the golf club head 10. More specifically, the sole extension length is measured from the front midpoint 90 to the rear midpoint 92 of the sole extension 72. The sole extension length is less than the length 52 of the golf club head 10. The sole extension length can range from 60% to 90% of the maximum club head length 52. In some embodiments, the sole extension length can range from 60% to 70%, 70% to 80%, 70% to 80%, 65% to 75%, 75% to 85%, or 85% to 90% of the maximum club head length 52. The sole extension length may be 60%, 65%, 70%, 75%, 80%, 85%, or 90% of the maximum club head length 52.

In some embodiments, the extension axis 88 is approximately parallel to the YZ plane. In other embodiments, the sole extension 72 can extend from the return 64 at an angle 98. The extension axis 88 can intersect the YZ plane at a point adjacent the rear end 14 of the club head 10. For example, the sole extension 72 can attach to the return 64 closer to either the heel end 22 or the toe end 20, and the sole extension 72 can point towards a center of the club head 10 as it extends rearward. In yet other embodiments, the extension axis 88 can intersect the YZ plane at a point adjacent the return portion 64. For example, the sole extension 72 can be pointed away from a center of the golf club head 10 as it extends rearward.

The sole extension 72 can be positioned so that the extension axis 88 intersects the YZ plane at an extension angle 98, as illustrated in FIGS. 7 and 8. The extension angle 98 can range from 0 degrees to 45 degrees. In some embodiments, the extension angle 98 can range from 0 to 10 degrees, 0 to 20 degrees, 0 to 30 degrees, 0 to 40 degrees, 10 to 20 degrees, 10 to 30 degrees, 10 to 40 degrees, 10 to 45 degrees, 20 to 30 degrees, 20 to 40 degrees, 20 to 45 degrees, 30 to 40 degrees, or 30 to 45 degrees. The extension angle 98 allows the weight at the rear end 14 of the club head 10 to be positioned offset towards the heel end 22 or the toe end 20. This offset positioning can give the club head 10 either a slight draw bias or a slight fade bias to cater to players with certain swing tendencies. In some embodiments, a front end of the sole extension 72 is offset to the heel end 22 or the toe end 20. In some of these embodiments (not shown), the rear weight channel or port 82 remains centered at the rear end 14 of the club head 10. In others of these embodiments, a front end and a rear end of the sold extension 72 are both offset from the YZ plane in different directions. Offsetting the front end of the sole extension 72 moves the center of gravity slightly towards the heel or toe ends 22, 20 of the club head 10, but the center of gravity movement is less drastic than when the weight 84 is offset.

### c. Wrap-around Component

The golf club head 10 further comprises the wrap-around component 100 that attaches to the main component 60 to form the hollow golf club head 10. The wrap-around component 100 is formed from a lightweight composite material to allow more discretionary weight to be redistributed to the perimeter of the club head 10. The injection-molded composite material of the wrap-around component 100 exhibits high strength and low weight. Furthermore, the wrap-around component structure includes thickened portions 118 that both allow the composite material to flow through the mold evenly during injection molding and provide additional durability to the finished wrap-around component 100.

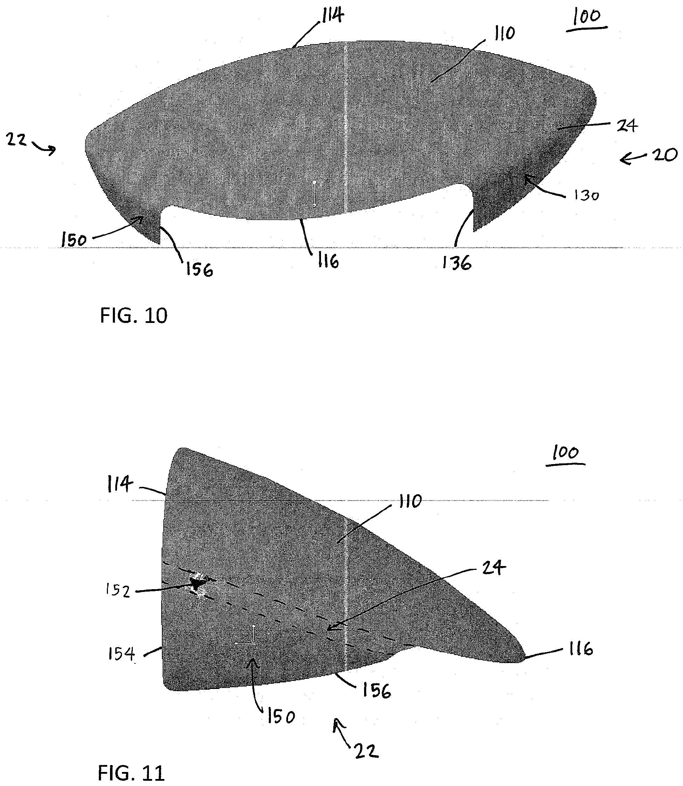

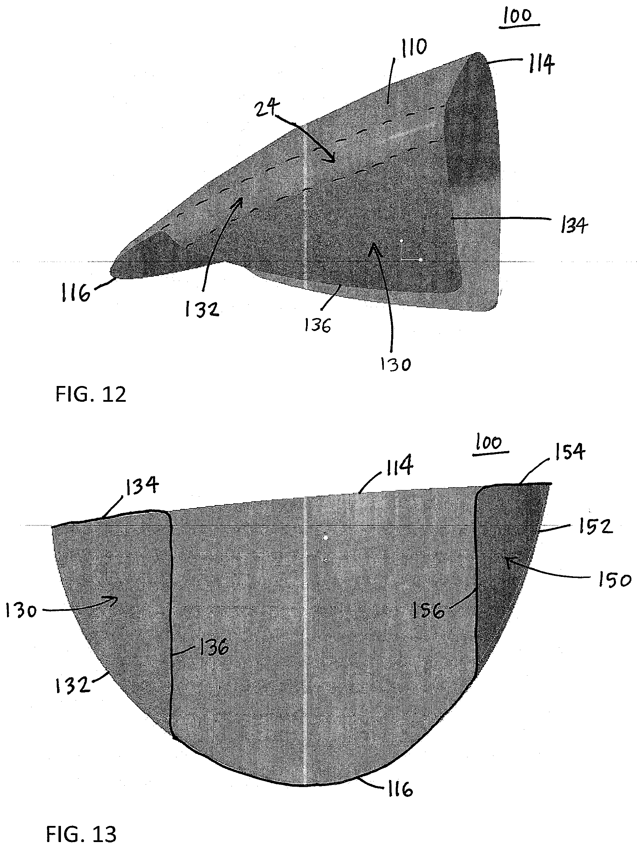

Referring to FIGS. 3 and 9-14, the wrap-around component 100 comprises a crown section 110, a toe wing 130, and a heel wing 150. The wrap-around component 100 comprises an outer surface 102 and an inner surface 104. The outer surface 102 is smooth. The inner surface 104 comprises varying regions of greater thickness that protrude slightly away from the remainder of the inner surface 104, as described below. The wrap-around component 100 can comprise one or more thicknesses 106 that range between 0.04318 cm (0.017 inch) and 0.1524 cm (0.060 inch). In some embodiments, the one or more thicknesses 106 of the wrap-around component can range between or can range between 0.04318 cm (0.017 inch) and 0.05334 cm (0.021 inch), 0.05334 cm (0.021 inch) and 0.0762 cm (0.030 inch), 0.0762 cm (0.030) inch and 0.1143 cm (0.045 inch), 0.1143 cm (0.045 inch) and 0.1524 cm (0.060 inch). The thinnest regions of the wrap-around component 100, which in some embodiments form a majority of the wrap-around component 100, can have a thickness 106 between 0.0762 cm (0.030 inch) and 0.1143 cm (0.045 inch).

In some embodiments, the wrap-around component 100 can comprise at least one thickness 106 as low as 0.04318 cm (0.017 inch), as low as 0.0508 cm (0.020 inch), as low as 0.0635 cm (0.025 inch), as low as 0.0762 cm (0.030 inch), as low as 0.0889 cm (0.035 inch), as low as 0.1016 cm (0.040 inch), as low as 0.1143 cm (0.045 inch), or as low as 0.127 cm (0.050 inch). In some embodiments, at least one thickness 106 of the wrap-around component 100 is less than 0.0635 cm (0.025 inch), less than 0.06604 cm (0.026 inch), less than 0.06858 cm (0.027 inch), less than 0.07112 cm (0.028 inch), less than 0.07366 cm (0.029 inch), less than 0.0762 cm (0.030 inch), less than 0.07874 cm (0.031 inch), less than 0.08128 cm (0.032 inch), less than 0.08382 cm (0.033 inch), less than 0.08636 cm (0.034 inch), less than 0.0889 cm (0.035 inch), less than 0.09144 cm (0.036 inch), less than 0.09398 cm (0.037 inch), less than 0.09652 cm (0.038 inch), less than 0.09906 cm (0.039 inch), less than 0.1016 cm (0.040 inch), less than 0.10414 cm (0.041 inch), less than 0.10668 cm (0.042 inch), less than 0.10922 cm (0.043 inch), less than 0.11176 cm (0.044 inch), or less than 0.1143 cm (0.045 inch).

The crown section 110 of the wrap-around component 100 forms a majority of the golf club head crown 16. The crown section 100 can comprise a gently sloping surface having one or more thicknesses 106. A cross-section of the crown section 110, taken along a plane parallel to the XY plane, can comprise an arcuate or parabolic outline.

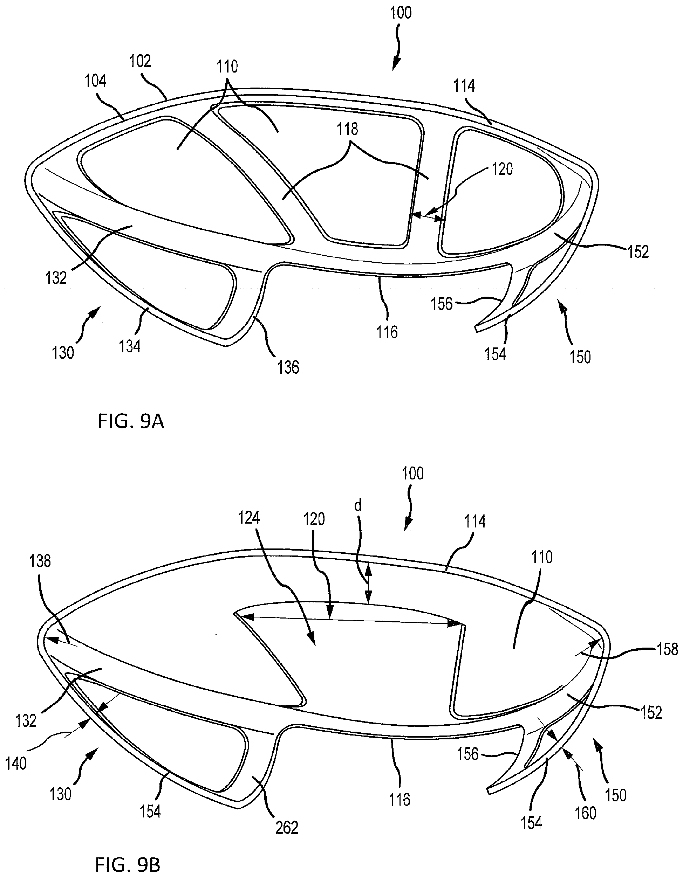

In some embodiments, such as generally shown in FIG. 9A, the crown section 110 can comprise a plurality of thickened portions 118. The thickened portions 118 can be in the form of channels, ridges, fan-shaped structures, or other regions of greater thickness on the inner surface 104 of the crown section 110. The thickened portions 118 are elongate regions that extend either roughly front-to-rear or roughly heel-to-toe. In some embodiments, an array of thickened portions 118 is fanned out across an inner surface 104 (bottom surface) of the crown section 110. The thickened portions 118 can comprise a thickness that is greater than the thickness of the remainder of crown section. The thickened portions 118 can comprise thicknesses between 0.1143 cm (0.030 inch) and 0.1524 cm (0.060 inch). The thickness portions 118 can comprise thicknesses of 0.0762 cm (0.030 inch), 0.08128 cm (0.032 inch), 0.08636 cm (0.034 inch), 0.09144 cm (0.036 inch), 0.09652 cm (0.038 inch), 0.1016 cm (0.040 inch), 0.10668 cm (0.042 inch), 0.11176 cm (0.044 inch), ), 0.11684 cm (0.046 inch), 0.12192 cm (0.048 inch), 0.127 cm (0.050 inch), 0.13208 cm (0.052 inch), 0.13716 cm (0.054 inch), 0.14224 cm (0.056 inch), 0.14732 cm (0.058 inch), or 0.1524 cm (0.060 inch). Since the thickness of the thickened portions is greater than the thickness of the remainder of the wrap-around component, the thickened portions 118 can act as flow leaders or highways for material flow during the injection molding process, as described further below.

The thickened portions 118 can each comprise a width 120. The width 120 of each thickened portion 118 can range between 0.127 cm (0.05 inch) and 0.508 cm (0.20 inch). In some embodiments, the width 120 of each thickened portion 118 is between 0.254 cm (0.10 inch) and 0.3048 cm (0.12 inch), 0.3048 cm (0.12 inch) and 0.3556 cm (0.14 inch), 0.3556 cm (0.14 inch) and 0.4064 cm (0.16 inch), 0.4064 cm (0.16 inch) and 0.4572 cm (0.18 inch), or between 0.4572 cm (0.18 inch) and 0.508 cm (0.20 inch). As described further below, the thickened portions 118 can act as flow leaders, providing a means for composite material to flow within the mold during the injection molding process.

In some embodiments, such as generally shown in FIG. 9B, the crown section 110 can comprise a central thickened portion 124 or fan-shaped thickened portion, which has a thickness greater than the remainder of the crown. In one configuration, this central thickened portion 124 has total area of from about 3.81 cm² (1.5 in²) to about 3.81 cm² (3.0 in²), measured from a crown view (viewed parallel to the XZ plane). In another configuration, this central thickened portion 124 has a total area of from about 5.08 cm² (2.0 in²) to about 6.35 cm² (2.5 in²). In some embodiments, the central thickened portion 124 has a slightly trapezoidal shape, whereby at least a section of the central thickened portion 124 that is closer to the face and/or front edge 114 is wider than a section of the thickened portion 124 that is more distant from the face. The central thickened portion 124 may be spaced from the front edge 114 of the crown section 110 by a distance (d) that is greater than about 2.032 cm (0.8 inch), or a distance that is between 2.032 cm (0.8 inch) and 2.54 cm (1.0 inch), or between 2.54 cm (1.0 inch) and 3.048 cm (1.2 inch), or between 3.048 cm (1.2 inch) and 3.556 cm (1.4 inch). In some embodiments, the distance (d) is approximately 3.175 cm (1.25 inch). As described further below, the central thickened portion 124 can act as a flow leader, providing a means for composite material to flow within the mold during the injection molding process.

The toe and heel wings 130, 150 of the wrap-around component 100 form portions of the sole 18, freeing up more discretionary weight than is possible in golf club heads with only composite crowns. The toe and heel wings 130, 150 fill in regions of the sole 18 that are not formed by the main component 60, making the sole 18 partially composite, so that the sole 18 has low weight regions. The toe wing 130 and heel wing 150 are integral with the crown section 110 of the wrap-around component 100. The toe wing 130 forms a portion of the toe end 20 of the club head 10. The heel wing 150 forms a portion of the heel end 22 of the club head 10. In the assembled club head 10, the wrap-around component 100 can be asymmetrical about the YZ plane. In some embodiments, the toe wing 130 is larger than the heel wing 150. The toe and heel wings 130, 150 attach to the crown section 110 along the skirt 24 of the golf club head 10. Instead of forming separate composite sole panels, attaching the toe and heel wings 130, 150 along the skirt 24 frees up more discretionary weight and simplifies the assembly of the club head 10.

The toe wing 130 curves downward and inward from the toe-side skirt or perimeter edge of the crown section 110. The toe wing 130 can bend or wrap downward and inward at a gentle rate. The desired final shape of the golf club head 10, particularly the sole 18 shape, can determine the rate at which the toe wing 130 bends inward. The toe wing 130 can be three-sided. The toe wing 130 can comprise a crown connection portion or edge 132, a front edge 134, and a side edge 136. The crown connection portion 132 is integral with a perimeter of the crown section 110 of the wrap-around component 100. The front edge 134 connects to the return 64 of the main component 60 when the club head 10 is assembled. The side edge 136 connects to the sole extension 72 of the main component 60 when the club head 10 is assembled.

Referring to FIGS. 9A and 9B, the toe wing 130 attaches to the edge of the crown section 110 in an arcuate and/or wrap-around fashion. The wrap-around connection of the toe wing 130 to the crown section 110, via the crown connection portion 132, defines a radius of curvature 138. The toe wing connection radius of curvature 138 can vary slightly or be constant throughout the transition between the crown section 110 and the toe wing 130. The toe wing connection radius of curvature 138 can range between 0.254 cm (0.10 inch) and 1.016 cm (0.40 inch), or between 0.381 cm (0.15 inch) and 0.635 cm (0.25 inch). The crown connection portion 132 can have a thickness 140 that is greater than the remainder of the toe wing 130. As described below, the crown connection portion 132 of the toe wing 130 can act as a flow leader, providing a means for composite material to flow within the mold during the injection molding process.

The heel wing 150 curves downward and inward from the heel-side skirt or perimeter edge of the crown section 110. Similar to the toe wing 130, the heel wing 150 can bend or wrap downward and inward at a gentle rate to form a shape that is desired for the heel-side sole of the golf club head 10. In some embodiments, the heel wing 150 bends inward less abruptly than the toe wing 130. The heel wing 150 does not extend as far inward as the toe wing 130. The heel wing 150 can be three-sided. The heel wing 150 can comprise a crown connection portion 152, a front edge 154, and a side edge 156. The crown connection portion 152 is integral with a perimeter of the crown section 110 of the wrap-around component 100. The front edge 154 connects to the return 64 of the main component 60 when the club head 10 is assembled. The side edge 156 connects to the sole extension 72 of the main component 60 when the club head 10 is assembled.

Referring to FIGS. 9A and 9B, the heel wing 150 attaches to the edge of the crown section in an arcuate and/or wrap-around fashion, similar to the toe wing 130. The wrap-around connection of the heel wing 150 to the crown section 110, via the heel wing crown connection portion 152, defines a radius of curvature 158. The heel wing connection radius of curvature 158 can be similar to the toe wing connection radius of curvature 138. In some embodiments, the heel wing connection radius of curvature 158 is smaller than the toe wing radius of curvature 138. As described below, the crown connection portion 152 of the heel wing 150 can act as a flow leader, providing a means for composite material to flow within the mold during the injection molding process.

In some embodiments, the toe wing 130 can be larger than the heel wing 150. The toe wing 130 can comprise more material than the heel wing 150. In embodiments where the toe wing 130 extends inward more sharply than the heel wing 150, the toe wing connection radius 138 can comprise a thickness 140 that is greater than the heel wing connection radius thickness 160. The greater thickness in the toe wing connection 132 provides strength to support the toe wing 130 and, as described below, enables proper material flow during injection molding.

The toe wing 130 and heel wing 150 can each comprise a thickness 140, 160, respectively, measured orthogonally from an inner surface 104 to an outer surface 102 of each wing. The thickness 140, 160 of each of the wings 130, 150 can taper down from adjacent the crown section 110 towards the front edges 134, 154 and side edges 136, 156 of each respective wing 130, 150. For example, the thickness 140, 160 of the wings 130, 150 adjacent the crown section 110 can range between 0.127 cm (0.050 inch) and 0.1524 cm (0.060 inch), whereas the thickness 140, 160 of the wings 130, 150 at the front edges 134, 154 and side edges 136, 156 of each wing can range between 0.0762 cm (0.030 inch) and 0.127 cm (0.050 inch). The front and side edges may not require as much strength and durability during impact as the portions of the wings adjacent the crown section 110, including the crown connection portions 132, 152. Therefore, the front edges 134, 154 and side edges 136, 156 may be thinner to save weight.

The wrap-around component 100 can further comprise a thinned region or lip (not shown) that runs around a peripheral edge of the wrap-around component 100. For example, the lip can run along the front edges 134, 154 of the wings 130, 150, the side edges 136, 156 of the wings, the rear peripheral edge 116 of the crown section 110, and a front edge 114 of the crown section 110. The lip comprises a thickness less than the thickness of the remainder of the wrap-around component 100. The lip can have a depth that matches a depth of the main component lip, so that the wrap-around component lip is configured to bond with the main component lip.

The wrap-around component 100 comprises a less dense material than the material of the main component 60. In some embodiments, the wrap-around component 100 can comprise a composite formed from polymer resin and reinforcing fiber. The polymer resin can comprise a thermoplastic. More specifically, the thermoplastic resin can comprise a thermoplastic polyurethane (TPU) or a thermoplastic elastomer (TPE). For example, the resin can comprise polyphenylene sulfide (PPS), polyetheretheretherketone (PEEK), polyimides, polyamides such as PA6 or PA66, polyamide-imides, olyphenylene sulfides (PPS), polycarbonates, engineering polyurethanes, and/or other similar materials. The reinforcing fiber can comprise carbon fibers (or chopped carbon fibers), glass fibers (or chopped glass fibers), graphine fibers (or chopped graphite fibers), or any other suitable filler material. In other embodiments, the composite material may comprise any reinforcing filler that adds strength and/or durability.

The density of the composite material, which forms the wrap-around component 100, can range from about 1.15 g/cc to about 2.02 g/cc. In some embodiments, the composite material density ranges between about 1.30 g/cc and about 1.40 g/cc, or between about 1.40 g/cc to about 1.45 g/cc. The composite material can have a melting temperature of between about 350 °F (177 °C) and 800°F (427 °C). In some embodiments, the composite material has a melting temperature of between about 410 °F (210 °C) to about 536 °F (280 °C). In some embodiments, the composite material can have a melting temperature of between about 482 °F (250 °C) and about 518 °F (270 °C).

The wrap-around component 100 has a high tensile strength of greater than about 60 MPa, making the wrap-around component 100 durable. The high tensile strength is achieved by forming the wrap-around component 100 from the polymer resins and reinforcing fibers described above. The polymer resin should preferably incorporate one or more polymers that have sufficiently high material strengths and/or strength/weight ratio properties to withstand typical use while providing a weight savings benefit to the design. Specifically, it is important for the design and materials to efficiently withstand the stresses imparted during an impact between the strike face and a golf ball, while not contributing substantially to the total weight of the golf club head. In general, the polymers can be characterized by a tensile strength at yield of greater than about 60 MPa. When the polymer resin is combined with the reinforcing fiber, the resulting composite material can have a tensile strength at yield of greater than about 110 MPa, greater than about 180 MPa, greater than about 220 MPa, greater than about 260 MPa, greater than about 280 MPa, or greater than about 290 MPa. In some embodiments, suitable composite materials may have a tensile strength at yield of from about 60 MPa to about 350 MPa.

The composite material of the wrap-around component 100 can have a fiber content between about 10% to about 60% by weight. In some embodiments, the composite material has a fiber content between about 20% to about 50% by weight, or between 30% to 40% by weight. In some embodiments, the composite material has a fiber content of between about 10% and about 15%, between about 15% and about 20%, between about 20% and about 25 %, between about 25% and about 30%, between about 30% and about 35%, between about 35% and about 40%, between about 40% and about 45%, between about 45% and about 50%, between about 50% and about 55%, or between about 55% and about 60% by weight. Typically, a higher fiber content produces a composite having a higher strength, and a lower fiber content produces a composite having a lower strength. However, a higher fiber content is not always better than a lower fiber content because the fiber content also affects the moldability of the component. As described below, the fiber content affects the achievable part thickness during injection molding.

In some embodiments, the reinforcing fiber comprises a plurality of distributed discontinuous fibers (i.e. "chopped fibers"). In some embodiments, the reinforcing fiber comprises a plurality of discontinuous "long fibers," having a designed fiber length of from about 3 mm to 25 mm. For example, in some embodiments, the fiber length is about 12.7 mm (0.5 inch) prior to the molding process. Other forms of reinforcing fiber, such as discontinuous "short fibers," fail to provide adequate strength properties to the final composite material ("short fibers" typically have a fiber length of from about 0.01 mm to 3 mm). The reinforcing long fibers are typically given premixed lengths. Due to breakage during the molding process, some fibers may actually be shorter than the described range in the final component. In some configurations, the discontinuous chopped fibers may be characterized by an aspect ratio (e.g., length/diameter of the fiber) of greater than about 10, or more preferably greater than about 50, and less than about 1500.

In some embodiments, the composite material comprises a long fiber reinforced TPU. The long fiber TPU can exhibit a high elastic modulus, greater than that of short carbon fiber compounds. The long fiber TPU can withstand high temperatures, making it suitable for use in a golf club head that is used and/or stored in a hot climate. The long fiber TPU further exhibits a high toughness, allowing it to serve well as a replacement for traditionally metal components. In some embodiments, the long fiber TPU comprises a tensile modulus between about 26,000 MPa and about 30,000 MPa or between about 27,000 MPa and about 29,000 MPa. In some embodiments, the long fiber TPU comprises a flexural modulus between about 21,000 MPa and about 26,000 MPa or between about 22,000 MPa and 25,000 MPa. The long fiber TPU material can exhibit a tensile elongation (at break) of between about 0.5% and about 2.5%. In some embodiments, the tensile elongation of the composite TPU material can be between about 1.0% and about 2.0%, between about 1.2% and about 1.4%, between about 1.4% and about 1.6%, between about 1.6% and about 1.8%, between about 1.8% and about 2.0%.

Although strength, weight, and moldability are the main considerations for the composite material, a suitable composite material may also exhibit secondary benefits, such as acoustic properties. Some composite materials mimic a metallic sound. For example, PPS and PEEK are two exemplary thermoplastic polymers that meet the strength and weight requirements of the present design, while also emitting a generally metallic acoustic response when impacted. Alternately, some composite materials are desirable because they damp the acoustic response at impact. Furthermore, geometries such as ribs or additional thickened regions can be easily incorporated into the wrap-around component 100 to damp the vibrations caused by certain frequencies upon impact. The damping geometries can be located in regions of the part that exhibit or vibrate at frequencies having an amplitude that is undesirably greater than other amplitudes of the acoustic response.

### II) Method of Manufacturing the Wrap-around Component

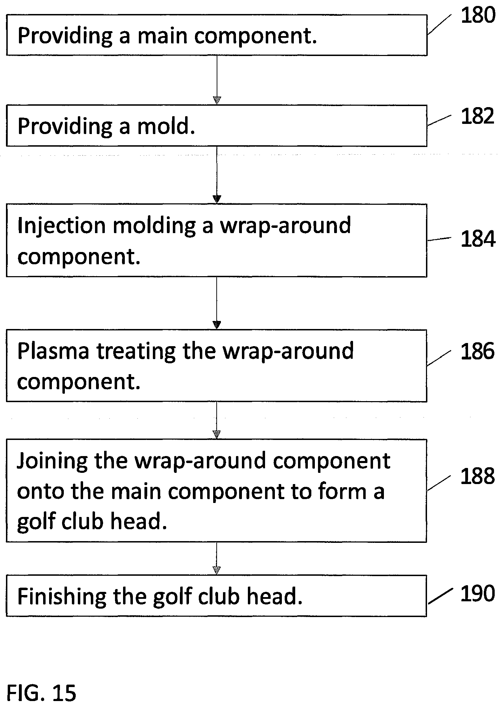

Described herein below is a method of manufacturing a multi-material golf club head, similar to the golf club head described above. Referring to FIG. 15, the method comprises providing a main component 180, providing a mold 182, injection molding a wrap-around component 184, plasma treating the wrap-around component 186, joining the wrap-around component onto the main component to form the golf club head 188, and finishing the golf club head 190.

The main component 60 can be provided by casting the main component 60 from a metal material. The main component 60 can be initially cast as a full body. Portions of a crown 16 and sole 18 of the club head 10 can be laser cut out of the full body to leave only the main component 60. This main component 60 is finished before the wrap-around component 100 is attached to it in the joining step.

A mold 200 can be provided in three parts: a top mold half 202, a bottom mold half 212, and a slide 230. The mold parts can together define a cavity 226 that corresponds to the desired shape of the wrap-around component 100. In some embodiments, the size of the mold cavity 226 is slightly different than the desired shape of the wrap-around component 100 to account for material shrink rate and springback. The bottom mold half 212 can comprise a center ballast 216 that assists in retaining the component in the proper location for ejection from the mold 200. The mold 200 can additionally comprise a sprue 204, a gate 206, ejection pins 218, cooling lines, and other necessary components.

Injection molding may be used to produce parts with intricate geometries and high impact strength. Injection molding the wrap-around component 100 comprises providing a mold 200 designed to account for shrink rate, spring back, and freeze off thickness of the injected material. The mold 200 is provided with a gate 206 and flow leaders that guide the injected material evenly into the mold. The even spread of the material into and throughout the mold 200 reduces weld lines. By reducing the size of the weld lines, the strength of the final part is increased.

Following injection molding, the wrap-around component 100 is plasma treated or the surface of the wrap-around component 100 is altered. The plasma treating process can increase the roughness and raise the surface energy of an outer surface of the wrap-around component 100. This higher surface energy improves the ability of the wrap-around component 100 to join to the main component 60 during the last step of the method.

Joining the wrap-around component 100 to the main component 60 requires applying adhesive to a lip 80 of the main component 60 and sliding the wrap-around component 100 over the main component 60. A lip of the wrap-around component 100 can overlap and bond to the lip 80 of the main component 60. The bonding step can further comprise allowing the adhesive to dry. In other embodiments, the wrap-around component 100 can be mechanically fastened to the main component 60, epoxied to the main component 60, or any other suitable method of permanently affixing the wrap-around component 100 to the main component 60.

After the joining step, the full club head 10 can be polished and cleaned. The club head 10 can be coated, plated, or painted. One or more weights can also be secured to the club head 10. After the club head 10 is finished, it is ready to be attached to a shaft and grip to form a fully assembled golf club.

### 1) Providing a Main Component

Providing the main component 60 can start with casting an unfinished version of the main component 60. The unfinished main component can be cast as a full club body, with a reduced thickness region. The reduced thickness region comprises at least a toe end region and a heel end region. A majority of the reduced thickness region, including the toe and heel end regions, can be located approximately where the wrap-around component 100 will later be attached. A peripheral section around an edge of the reduced thickness region will eventually form the lip of the main component. The unfinished main component is cast with the reduced thickness region because the reduced thickness region helps the main component hold its desired shape during the casting process. Casting the main component 60 without the reduced thickness region could result in warping of the part or other casting quality issues. Therefore, casting with the reduced thickness region, which is later removed, ensures that the main component 60 maintains its desired shape so that wrap-around component 100 will fit on it correctly during the bonding step.

After the unfinished main component is removed from the mold in which it was cast, a laser is used to cut out the unwanted portions of the reduced thickness region, leaving only the peripheral section, which forms the lip 80 of the main component 60. The heel and toe regions of the reduced thickness region are removed, since these heel and toe regions are intended to be replaced by the wrap-around component 100 in the completed club head 10. The lip 80 can be ground down or polished, as necessary. In some embodiments, a strikeface 62 of the club head 10 is integrally cast as part of the main component 60. In other embodiments, the main component 60 can be cast without a strikeface (with an opening or void in the front of the main component). In these embodiments, a faceplate is provided separately by either casting or forging the faceplate from a metallic material. The faceplate can be conventionally welded, laser welded, or swedged into the front opening of the main component 60. The main component 60 can be finished through sanding, plasma treatment, polishing, or other finishing processes.

### 2) Providing a Mold

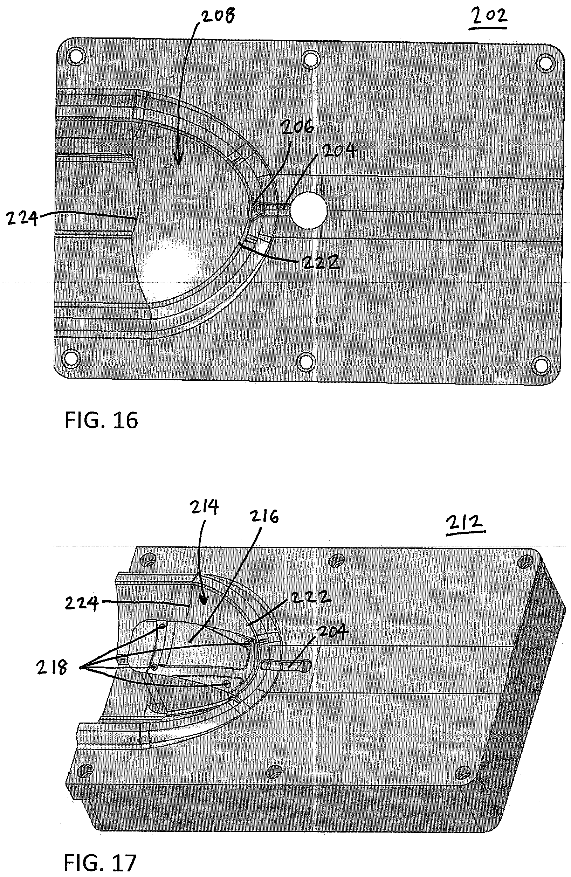

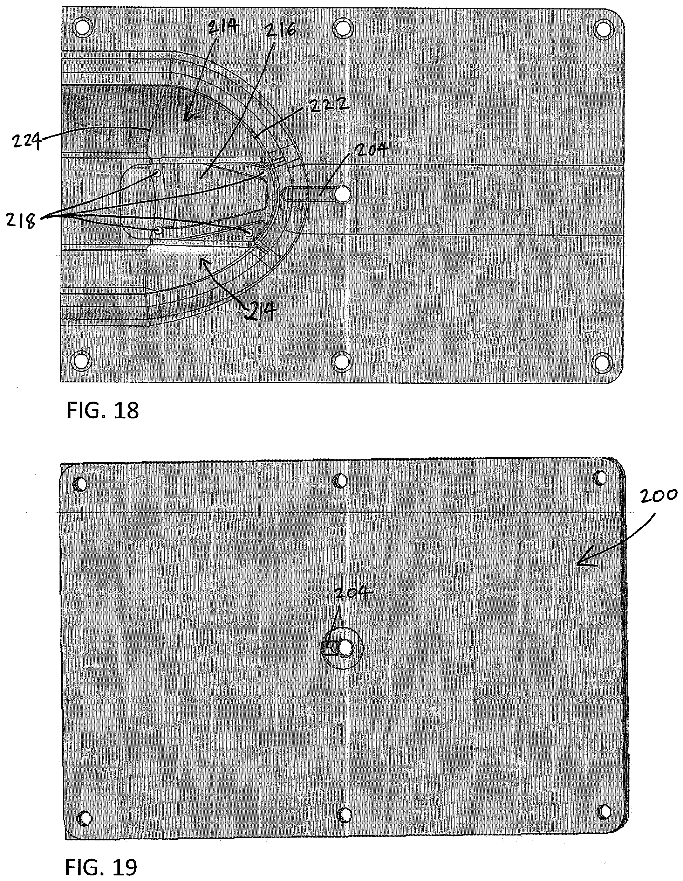

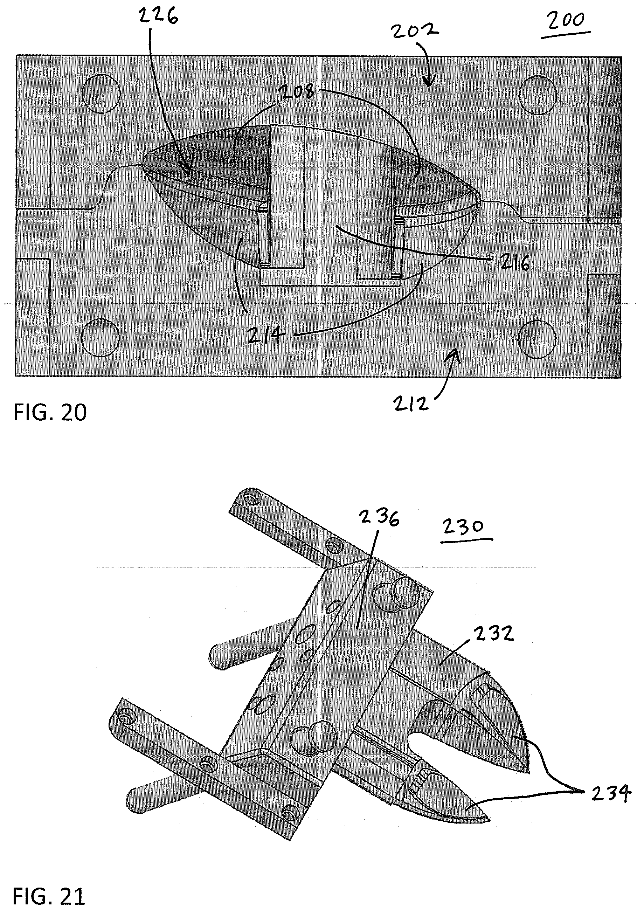

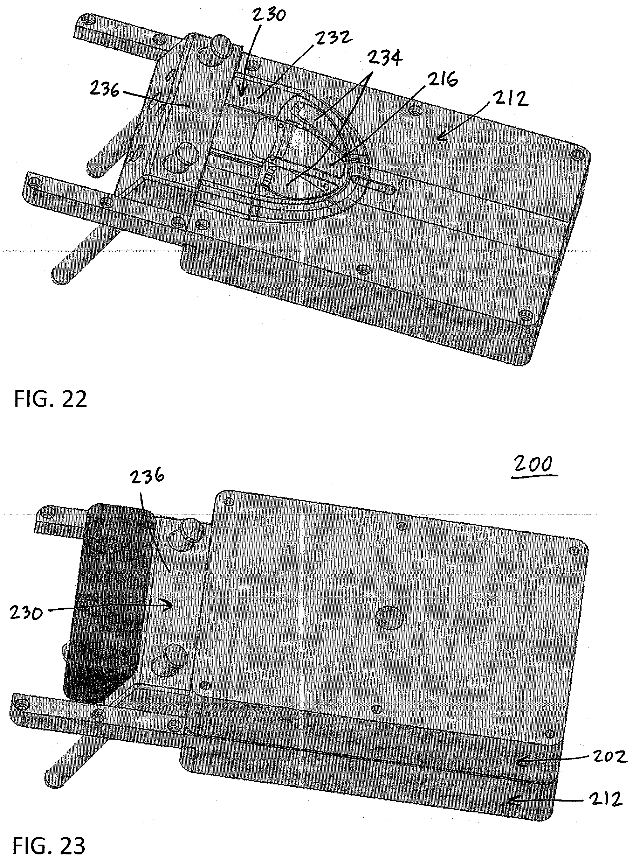

Referring to FIGS. 16-24, in most embodiments, the mold 200 comprises a top mold half 202, a bottom mold half 212, and a slide 230. Referring to FIGS. 16 and 19, the top mold half 202 can comprise a sprue 204, a gate 206, and a top reservoir 208. Referring to FIGS. 17 and 18, the bottom mold half 212 can comprise a bottom reservoir 214 and a center ballast 216. FIG. 20 illustrates a front view of the top mold half 202 and the bottom mold half 212 forming the outer surface shape of the wrap-around component 100, before the slide 230 is added to the mold assembly. Referring to FIG. 21, the slide 230 comprises a fork 232, and a lock 236. As shown in FIGS. 22-24, when the top mold half 202 and bottom mold half 212 compress, the slide 230 is inserted in between the top and bottom mold halves 202, 212, forming a sealed, mold cavity 226 in roughly the shape of the wrap-around component 100. The composite material is then dispensed into the mold cavity 226.

Referring to FIGS. 16, 19, and 25, the top mold half 202 comprises the sprue 204, the mold top reservoir 208, and the gate 206. The sprue 204 transfers the molten composite material from the screw tip 252 of the injection molding compression screw 244 to the gate 206 of the mold 200. The gate 206 then transfers the material evenly into the top and bottom reservoirs 208, 214, which form the mold cavity 226. The walls of the sprue 204, gate 206, and mold 200 can interact with the flowing composite material, causing at least 50% of the fibers to align in the direction of flow.

Referring to FIGS. 17 and 18, the bottom mold half 212 comprises the bottom reservoir 214 and the center ballast 216. The center ballast 216 is integral to the bottom mold half 212. The center ballast 216 further comprises at least one ejector pin 218, embedded in the center ballast 216. The center ballast 216 functions to create the shape of the wrap around component 100.

Referring to FIGS. 21, the slide 230 comprises the fork 232 and the lock 236. The slide 230 is placed in between the top mold half 202 and bottom mold half 212, and the fork 232 surrounds the center ballast 216 of the bottom mold half 212. In most embodiments, the fork 232 is asymmetrical in shape, and comprises two prongs 234. In other embodiments, the fork 232 can comprise a symmetrical shape or 1-5 prongs 234. The fork 232 functions to surround the center ballast 216 and form the full shape of the wrap-around component 100. The slide lock 236 functions to hold the slide 230 in between the top mold half 202 and bottom mold half 212 during injection, forming a sealed and secure cavity 226. Without the lock 236, the mold 200 would be subject to molten composite material leaking from the mold 200, causing improperly formed components.

### Flow Direction and Fiber Alignment

The location of the gate 206 affects the flow direction of the molten composite material through the mold 200. The flow direction of the composite material determines the fiber alignment within the finished wrap-around component 100. The fiber alignment determines the strength of the wrap-around component 100, particularly the directional strength. The injection-molded component 100 is strongest in a direction parallel to an average fiber alignment direction. Therefore, the location of the gate 206 of the mold 200 is critical to the final structural strength and durability of the wrap-around component 100, so as to achieve the alignment of as many fibers as possible in a front-to-rear direction.

In the illustrated embodiment of the mold 200, the gate 206 is positioned at what will become the rear end 14 of the club head 10. The gate 206 connects to a rear peripheral edge 116 of the wrap-around component 100. Specifically, the gate 206 connects to the crown section 110 of the wrap-around component 100. As described further below, locating the gate 206 adjacent the rear peripheral edge 116 of the crown section 110 causes the material to flow generally forward, which initially aligns the fibers in a generally front-to-rear direction. This can increase the strength of the final component, since the composite material strength is affected by the fiber alignment. Furthermore, locating the gate 206 centrally, between what becomes the toe end 20 and the heel end 22, allows the composite material to flow quickly and evenly throughout the part. In contrast, if for instance the gate 206 were connected to the toe wing 20 or heel wing 22 of the club head 10, the material flow could create unwanted weld lines within the opposite toe or heel wing 130, 150.

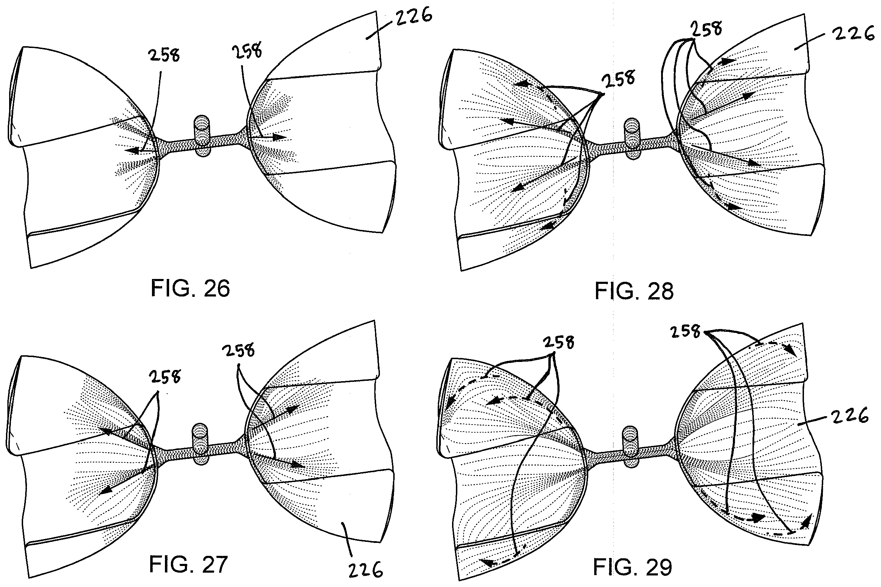

Referring to FIGS. 26-29, during the injection molding process, the direction of material flow within the mold will affect the fiber alignment. FIGS. 26, 27, 28, and 29 show a mold pathline simulation (showing the flow direction of material) at a first, second, third, and fourth stage in time, respectively. By locating the gate 206 on a rear extremity 222 of the mold 200 (corresponding to the rear peripheral edge 116 of the wrap-around component 100) the material initially flows forward towards a front extremity 224 of the mold 200 (opposite of the gate 206, and corresponding to a front edge 114 of the wrap-around component 100). This flow aligns the fibers in the central crown section 110 (top reservoir 208 of top mold half 202) roughly perpendicular to the strikeface 62 (roughly parallel to the YZ plane) in the final club head 10.

### Fiber Alignment and Strength

The strength of the composite material in a given direction is affected by the fiber alignment. The fiber alignment direction can vary in different parts of the wrap-around component 100, causing the directional strength to also vary throughout the wrap-around component 100. However, since a majority of the fibers are aligned in a roughly front-to-rear direction, the wrap-around component 100 is strongest in the front-to-rear direction. This fiber alignment and strength is accomplished by positioning the gate 206 at the rear extremity 222 of the mold 200 (corresponding to the rear peripheral edge 116 of the wrap-around component 100).

Having the fibers aligned roughly perpendicular to the strikeface 62 increases the durability of the club head 10 in the front-to-rear direction. The durability of the crown 16 in the front-to-rear direction is necessary to prevent failure, because upon impact with a golf ball, the main component sole extension 72 will bend upwards and exert stress on the wrap-around component crown section 110. The crown section 110 is compressed between the main component sole extension 72 and the main component return 64. Therefore, aligning the fibers with the direction of compression stress that is expected at impact with a golf ball lowers the likelihood of failure within the composite wrap-around component 100.

Referring to FIGS. 28 and 29, the material also flows outwards towards areas of the bottom mold half reservoir 214 that correspond to the toe wing 130 and heel wing 150 of the wrap-around component 100. The material flows around the peripheral edge of the crown section 110 to form the skirt 24, including the rear peripheral edge 116, and the toe and heel wings 130, 150. The material flow towards mold areas corresponding to the toe and heel wings 130, 150 causes the fibers inside regions of the crown section 110 of the wrap-around component 100 to align in a center rear-to-toe direction or a center rear-to-heel direction. In other words, some populations, groups, or regions of reinforcing fibers in a rearward toe end of the crown 16 and a rearward heel end of the crown 16 can be aligned between 0 to 90 degrees from the YZ plane in the finished golf club head 10. Some fiber populations can be aligned between 0 to 20 degrees, 10 to 30 degrees, 20 to 40 degrees, 30 to 50 degrees, 40 to 60 degrees, 50 to 70 degrees, 60 to 80 degrees, or 70 to 90 degrees from the YZ plane in the finished golf club head 10.

As illustrated, the fiber populations closer to the heel and toe wings 130, 150 can be aligned at a greater angle than the fiber populations closer to the center of the crown section 110 (closer to the YZ plane). Additionally, the fiber populations closer to the rear end 14 of the club head (closer to the mold gate 206) can be aligned at a greater angle than fiber populations closer to the front end 12 of the club head. This change in fiber alignment is caused by the single gate location 206 and the rounded shape of the rear end 14 of the club head. The material fills outwards from the single gate 206 towards the toe and heel ends 20, 22 of the mold 200, causing an initially steep angle of the fibers towards the toe and heel ends. However, as the material continues to fill the mold 200 (corresponding to regions of the wrap-around component 100 closer to the front edge 114), the alignment angle of the fibers with respect to the YZ plane decreases because the rounded shape mold cavity 226 (corresponding to the rounded shape of the wrap-around component 100) causes composite material to flow more forward.

In some embodiments, between 30% and 70%, 40% and 60%, or 45% and 55% of the crown section fibers within 2.54 cm (one inch) of the gate 206 are aligned between 45 to 90 degrees from the YZ plane (more towards the toe end 20 or heel end 22 than towards the front end 12 of the finished club head 10). In some embodiments, between 20% and 60%, 30% and 50%, or 35% and 45% of the crown section fibers beyond 2.54 cm (one inch) from the gate but within 5.08 cm (two inches) of the gate 206 are aligned between 45 to 90 degrees from the YZ plane. In some embodiments, less than 10%, less than 20%, less than 30%, or less than 40% of the crown section fibers beyond 5.08 cm (two inches) from the gate 206 are aligned between 45 to 90 degrees from the YZ plane.

The gate placement corresponding to the rear peripheral edge 116 of the wrap-around component 100 results in the reinforcing fibers near the front edge 114 of the wrap-around component being aligned more closely (or at a lesser angle) to the YZ plane (perpendicular to the strikeface). In the finished golf club head 10, it is desirable that regions closer to the front end 12 of the golf club head 10 have a higher strength than regions closer to the rear end 14, because the highest impact stresses occur at the strikeface, which is at the front end. Therefore, by placing the gate at a rear extremity 222 of the mold 200 instead of a front extremity 224 of the mold 200, the created wrap-around component 100 is most durable in a region of the golf club head 10 that will endure higher stresses at impact.

In some embodiments, the gate 206 is connected to the part of the mold 200 that corresponds to a thickest portion of the component. In other embodiments, the gate 206 is connected to a part of the mold 200 that corresponds to a thin portion of the component. Typically, an injection molded component is weaker adjacent where the gate 206 was connected to the component during manufacturing. For this reason, placing the gate 206 at a rear extremity 222 of the mold 200 instead of a front extremity 224 of the mold further increases the durability of the resulting wrap-around component 100. However, the crown section 110 to which the gate 206 attaches has a thin geometry, making it necessary to have flow leaders to encourage the flow of material throughout the mold 200. As described further below, the thickened portions 118 and the crown connection portions 132, 152 of the wrap-around component 100 can act as flow leaders during the injection molding process.

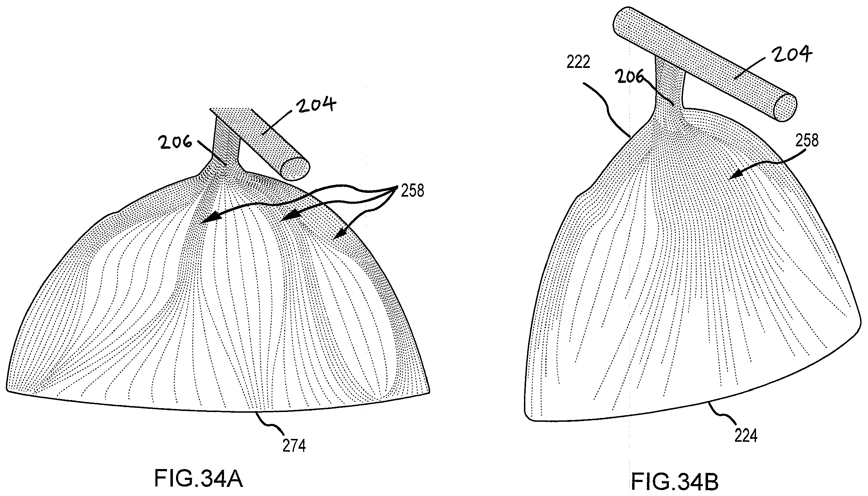

FIGS. 34A and 34B illustrate simulated mold flow diagrams of different embodiments of the wrap-around component 100, such as provided in FIGS. 9A and 9B, respectively. As shown, both embodiments provide substantially uniform flow paths from the gate 206. However, the wide gate shown in FIGS. 9B and 34B and the central thickened section 124 act as an extra wide flow leader that directs the inflowing polymer uniformly from the gate 206 toward the front edge 114 of the crown section 110. Said another way, the central thickened section 124 provides a more oriented polymer flow (and thus fiber alignment) at and near the front edge 114, despite the central thickened section 124 not extending all of the way to the front edge 114. In doing so, the material has a more uniform strength across a central region of the crown 16, as opposed to a strength that is varied across the crown 16 due to changes in the alignment angle of the fibers.

### Springback, Clamshell Shape

The mold cavity 226 generally corresponds to the shape of the resulting wrap-around component 100. However, to account for springback (warping) of the injection molded part, the mold cavity 226 can be shaped slightly differently than the final desired wrap-around component structure 100. As illustrated in FIGS. 9A and 9B, the toe wing 130, the heel wing 150, and the crown section 16 of the wrap-around component 100 together form a clamshell-like shape. The toe wing side edge 136, the heel wing side edge 156, and a rear peripheral edge 116 of the crown section 110 together border a cutout section, that is configured to receive the main component sole extension 72. The clamshell shape causes the outer surface 102 of the wrap-around component 100 to have a slightly greater surface area than the inner surface 104 of the wrap-around component 100. This disparity in the outer and inner surface areas affects the geometry of the wrap-around component 100 after it is molded. The compressive stresses on the outer surface 102 outweigh the compressive stresses on the inner surface 104, pulling the toe and heel wings 130, 150 slightly outward. This phenomenon is known as springback in the injection molding industry. Due to springback, injection molding can cause warping of the wrap-around component 100 into a wider clamshell shape than originally molded. To account for this warping, the mold 200 can be shaped with the wings 130, 150 slightly offset inwards from the desired final shape. This allows the wings 130, 150 to springback or warp outwards to arrive at the desired shape.

### Shrink Rate

The composite material can comprise a shrink rate. The shrink rate is the amount that the part contracts or shrinks after removal from the mold. Since the composite material may shrink after removal from the mold 200, the mold 200 must be designed larger than the desired final component shape. Depending on the composite material that is used, the shrink rate can differ.

### 3) Injection Molding a Wrap-around Component

Injection molding a wrap-around component 100 can comprise the following: selecting a composite material, drying the composite material, heating the composite material, compressing the heated material into the mold 200, cooling the mold 200 to solidify the composite material into the wrap-around component 100, and ejecting the wrap-around component 100 from the mold 200. The success of the injection molding process is dependent on the thickness and shape of the wrap-around component 100, which affects the flow speed.

### Freeze off Thickness and Material Flow

The ability of the composite material to flow through the mold 200 is limited by the polymer type and the resin content. Different polymers can have different freeze off thicknesses. The freeze off thickness is the thickness at which the material can no longer flow smoothly through or into a region of the mold 200. Composites having a lower fiber content can typically be molded into thinner parts. Using a composite with a lower fiber content can allow a part to be molded with a lower thickness than would be possible with a higher fiber content material. Thermoplastic composites comprise different freeze off thicknesses, the minimum thicknesses at which the material will flow within a mold. Using a material that has a freeze off thickness greater than the mold's minimum thickness will result in the material freezing off or incompletely filling the mold. Since fiber content affects both the strength and the manufacturable thickness of the final component, the composite material must be selected to reflect the desired geometry and properties of the final component.

In addition to keeping the thickness 106 of the wrap-around component 100 greater than the freeze off thickness of the selected composite material, the smooth flow of material through the mold 200 can be improved by tapering the thickness in certain regions and/or including structures which act as flow leaders into the design of the wrap-around component 100. As described above, the wrap-around component 100 can comprise multiple thicknesses across the crown section 110, the toe wing 130, and the heel wing 150. As also described above, the wrap-around component 100 can comprise thickened portions 118 in the crown section 110 (or a central thickened portion 124) and crown connection portions 132, 152 where the toe wing 130 and the heel wing 150 join to the crown section 110. Because of their thicknesses and orientations, the thickened portions 118 (or the central thickened portion 124) and the crown connection portions 132, 152 can act as flow leaders. During injection molding, these flow leaders can direct the molten composite material towards the front extremity 224 of the mold 200 and the toe and heel wing regions. The thickened portions 118 (or the central thickened portion 124) direct the material generally towards the front extremity 224. The crown connection portions 132, 152 direct the material generally towards the toe and heel wing regions. The flow leaders ensure that the mold fills evenly and completely, without prematurely freezing off.

The crown connection portion 132 of the toe wing 130 can act as a toe wing flow leader. The crown connection portion 132, which has a thickness 140 greater than the remainder of the toe wing 130, can provide a channel or highway for material to flow through during the injection molding process. The crown connection portion 132 (or toe wing flow leader) enables the composite material to evenly and properly fill the toe wing 130. The crown connection portion 152 of the heel wing 150 can act as a heel wing flow leader. The crown connection portion 152, which has a thickness 160 greater than the remainder of the heel wing 150, can provide a channel or highway for material to flow through during the injection molding process. The crown connection portion 152 (or heel wing flow leader) enables the composite material to evenly fill the heel wing 150. Additionally, within the completed wrap-around component 100, the added thickness in the toe and heel crown connection portions 132, 152 can provide strength to support the toe and heel wings 130, 150, respectively.

In addition to flow leaders, thickness tapering in parts of the wrap-around component structure can contribute to the smooth flow of material into the mold cavity 226. A slight taper in the thickness of each wing 130, 150 can minimize material and mass, while leaving sufficient thickness for the material to flow within certain regions (such as mold regions corresponding to edges of the wings) during the manufacturing of the wrap-around component 100. The thicker regions encourage the flow of material within the mold 200. The minimum thickness of the toe and heel wings 130, 150 is determined by the freeze off thickness of the material.

### Reduction of Weld Lines

The three-sided shape of the toe wing 130 facilitates the even/uniform flow of material into the tip end of the wing 130 during the injection molding process. During the injection molding process, the crown connection portion 132 is formed first. The material then flows towards the front edge 134 and the side edge 136 to form the remainder of the toe wing 130. The shape of the toe wing 130 reduces the size of weld lines in the final wrap-around component 100. Weld lines can form during the injection molding process when material fills different portions of the mold 200 at different rates and intersects to form a line or region of discontinuous flow. A weld line is generally located within a portion of the mold 200 that fills last during the injection molding process.

In some mold designs, injected material reaches two separate regions of the mold faster than an intermediate region. As the material continues to fill the mold, the material within the two separate regions converge within the intermediate region. The angle and speed at which the material converges within the intermediate region can create a weld line. In some embodiments, the material on one side of the weld line can have an average fiber orientation that differs from the average fiber orientation on the opposite side of the weld line. In some embodiments, the average fiber orientation on the sides of the weld line can differ by between 5 degrees and 90 degrees. The weld line can be a resin rich region, having up to 50% less fiber content than the surrounding regions. The low fiber content can lead to increased structural failure along weld lines. A weld line can comprise a strength that is up to 90% lower than the rest of the part. Therefore, it is advantageous to limit the number and size of weld lines. The three-sided shape of the toe wing 130 minimizes or eliminates the formation of weld lines by providing a geometry that can fill evenly and at a relatively steady rate.

The three-sided shape of the heel wing 150 facilitates the flow of material into the tip end of the wing 150 during the injection molding process. The flow of material in the heel wing 150 can be similar to the flow of material in the toe wing 130, as described above. Similar to the toe wing 130, the three-sided shape of the heel wing 150 also reduces or eliminates the weld lines in the final component.

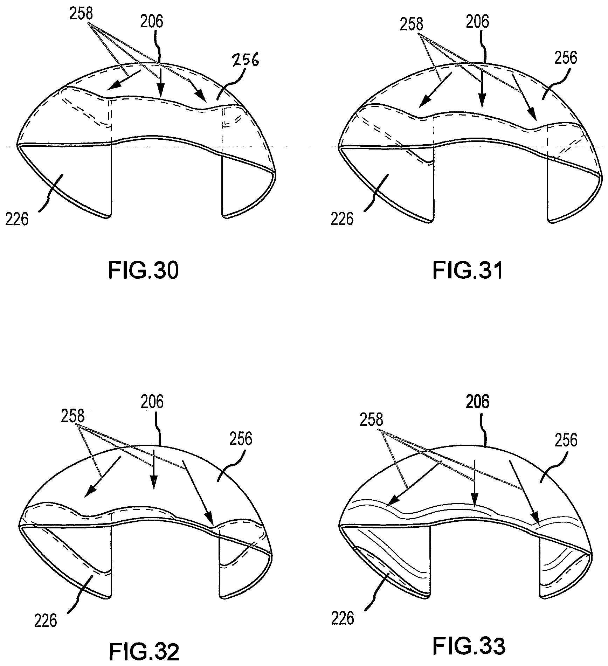

Referring to FIGS. 30-33, the mold 200 fills at a relatively even rate in the toe end 20 and heel ends 22 of the mold cavity 226. FIGS. 30, 31, 32, and 33 show a mold fill simulation at a first, second, third, and fourth time stamp, respectively. The molten composite material 256 flows from the gate 206 into the remainder of the mold cavity 226, in a flow direction 258 moving away from the gate 206. The even fill rate is achieved in part by the location of the gate 206, the one or more flow leaders in the crown section 110, and the toe and heel wing crown connection portions 132, 152, which act as flow leaders along the skirt 24. The aforementioned three-sided shaping and thickness taper (optional) of the toe and heel wings 130, 150 can also contribute to the even fill rate. The gate 206 initiates the directional spread of the material when it is injected into the mold cavity 226. The flow leaders, including the crown connection portions 132, 152, facilitate the movement of the composite material across the crown section 110 and around into the toe and heel wings 130, 150. The even fill rate reduces weld lines in the completed part, increasing the durability of the wrap-around component 100.

### Selecting and Drying a Composite Material

Injection molding the wrap-around component 100, requires first selecting a type of composite material. As described above, the wrap-around component 100 can comprise a composite formed from polymer resin and reinforcing fiber. The polymer resin can comprise a thermoplastic. More specifically, the thermoplastic resin can comprise a thermoplastic polyurethane (TPU) or a thermoplastic elastomer (TPE). For example, the resin can comprise polyphenylene sulfide (PPS), polyetheretheretherketone (PEEK), polyimides, polyamides such as PA6 or PA66, polyamide-imides, olyphenylene sulfides (PPS), polycarbonates, engineering polyurethanes, and/or other similar materials. The reinforcing fiber can comprise carbon fibers (or chopped carbon fibers), glass fibers (or chopped glass fibers), graphine fibers (or chopped graphite fibers), or any other suitable filler material. In other embodiments, the composite material may comprise any reinforcing filler that adds strength and/or durability. The composite material can be provided in pellets that comprise both the polymer resin and the reinforcing fiber.

Each of the aforementioned composite materials must be properly dried, prior to the heating of the composite material. Composite materials must be dried prior to injection molding, to remove any and all of the moisture that exists within or on the material (often times composite materials are in pellet forms in large buckets, wherein water or moisture can be trapped between pellets). To properly dry the composite materials, the composite materials are placed in a heated vacuum, with zero humidity, and dried for different amounts of time. This step is necessary, because any moisture that is heated and compressed in the injection molder, can turn into steam and be shot out of the injection molder at high speed, high temperature, and high pressure. Moisture trapped in the composite material must be removed prior to the heating process, to prevent damage to the injection molder or injury to the operator of the machinery.

In Table A below, are 5 example polymers that can be used in various embodiments of wrap-around components 100 for the golf club head. The drying temperature can range from 65.6°C (150°F) to 176.7°C (350°F). In some embodiments the drying temperature can be 65.6°C (150°F), 79.4°C (175°F), 93.3°C (200°F), 107.2°C (225°F), 121.1°C (250°F), 135°C (275°F), 148.9°C (300°F), 162.8°C (325°F), or 176.7°C (350°F). Furthermore, the drying time can range from 0 hours to at least 24 hours. In some embodiments, no drying time is necessary. In other embodiments, the drying time required can be at least 2 hours, at least 4 hours, at least 6 hours, at least 8 hours, at least 10 hours, at least 12 hours, or at least 14 hours. In some embodiments, the drying time required can range between 0-2 hours, 2-4 hours, 4-6 hours, 6-8 hours, 8-10 hours, 10-12 hours, 12-14 hours, 14-16 hours, 16-18 hours, 18-20 hours, 20-22 hours, or 22-24 hours. Further still, in some embodiments, the drying time can well exceed the minimum dry time (*i.e.*, drying Nylon 66, which has a minimum drying time of 4 hours, for 28 hours).

**Table A**

| **Polymer Type** | **Nylon 66** | **Nylon 6** | **PP** | **TPU** | **PES** |
|---|---|---|---|---|---|
| **Temperature** | 85°C (185°F) | 85°C (185°F) | Not required | 87.8°C (190°F) | 148.9°C (300°F) |
| **Time** | 4 hours | 4 hours | N/A | 4 hours | 6 hours |
| **Max Moisture Content** | 0.18% | 0.18% | N/A | 0.02% | 0.04% |

### Heating the Composite Material

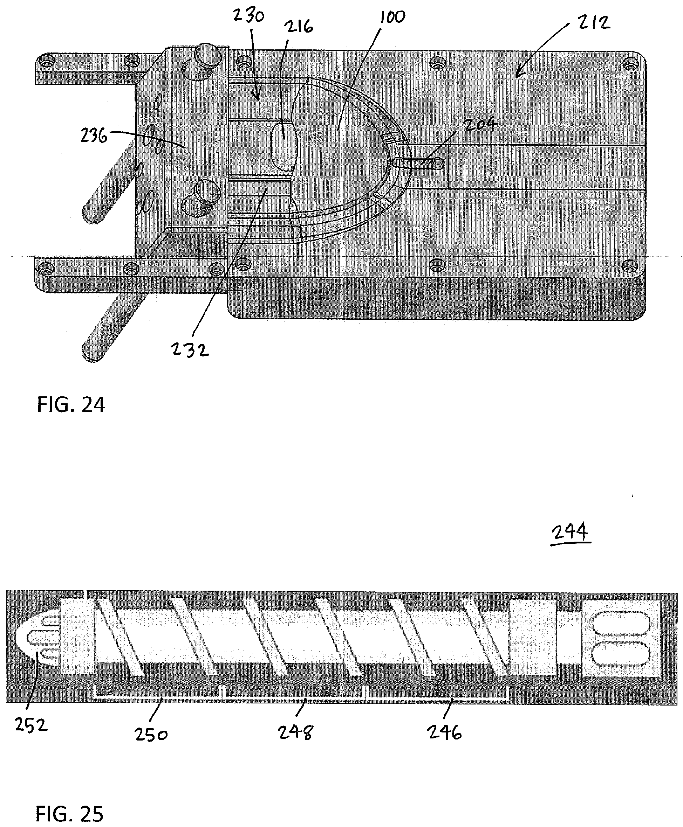

Once the drying process is complete, the chosen composite material can be heated in the injection molder. In reference to FIG. 25, in one embodiment, the injection molder comprises a hopper (not shown), a compression screw 244, a screw tip 252, and a mold 200. The composite material (in pellet form) is placed in the hopper, wherein the hopper slowly feeds pellets into the compression screw 244. The compression screw 244 gradually rotates moving the pellets from the hopper, towards the screw tip 252. As the pellets are moved from the hopper to the screw tip 252, they are heated at various temperatures, liquifying the pellets. The molten composite material passes into screw tip 252 and then dispensed out of the screw tip 252 into the mold 200, thus forming the wrap-around component 100.

However, there are a variety of factors that must be accounted for in the injection molder to properly heat the chosen composite material. The chosen composite material must be heated at various temperatures as it moves from the hopper, to the compression screw 244, to screw tip 252, and thus into the mold. Further, the compression screw 244 comprises three different zones, including a feed zone 246, a transition zone 248, and a metering zone 250, at which the composite material can be heated at different temperatures. In total there are 5 different regions of the injection molder, in which the composite material can be heated at various temperatures, to optimize the flow and material properties of each material.

Referring to Table B, below, are 5 example polymers, that can be used in various embodiments of wrap-around components 100 for the golf club head, and their respective heating ranges for the five regions of the injection molder.

**Table B**

| **Polymer Type** | **Nylon 66** | **Nylon 6** | **PP** | **TPU** | **PES** |
|---|---|---|---|---|---|
| **Feed Zone** | 282.2-298.9°C (540°F-570°F) | 260-276.7°C (500°F-530°F) | 198.9-210°C (390°F-410°F) | 204.4-226.7°C (400°F-440°F) | 348.9-365.6°C (660°F-690°F) |
| **Transition Zone** | 287.8-304.4°C (550°F-580°F) | 265.6-282.2°C (510°F-540°F) | 210-215.6°C (410°F-420°F) | 210-232.2°C (410°F-450°F) | 360-376.7°C (680°F-710°F) |
| **Metering Zone** | 293.3-310°C (560°F-590°F) | 271.1-287.8°C (520°F-550°F) | 210-221.1°C (410°F-430°F) | 215.6-237.8°C (420°F-460°F) | 365.6-382.2°C (690°F-720°F) |
| **Screw Tip** | 287.8-310°C (550°F-590°F) | 271.1-287.8°C (520°F-550°F) | 204.4-215.6°C (400°F-420°F) | 221.1-243.3°C (430°F-470°F) | 371.1-387.8°C (700°F-730°F) |
| **Mold** | 93.3°C (200°F) | 93.3°C (200°F) | 79.4°C (175°F) | 87.8°C (190°F) | 162.8-193.3°C (325°F-380°F) |

The temperature at the feed zone 246 of the injection molder can range between 176.7-426.7°C (350°F-800°F). In some embodiments, the temperature at the feed zone 246 of the injection molder can range between, 176.7-204.4°C (350°F-400°F), 204.4-232.2°C (400°F-450°F), 232.2-260°C (450°F-500°F), 260-287.8°C (500°F-550°F), 287.8-315.6°C (550°F-600°F), 315.6-343.3°C (600°F-650°F), 343.4-371.1°C (650°F-700°F), 371.1-398.9°C (700°F-750°F), and 398.9-426.7°C (750°F-800°F). In other embodiments, the temperature at the feed zone of the injection molder can be at least 204.4°C (400°F), at least 260°C (500°F), at least 315.6°C (600°F), at least 371.1°C (700°F), or at least 426.7°C (800°F). Further still, in some embodiments the temperature at the feed zone 246 of the injection molder can range between the provided ranges in Table B above.

The temperature at the transition zone 248 of the injection molder can range between 176.7-426.7°C (350°F-800°F). In some embodiments, the temperature at the transition zone 248 of the injection molder can range between, 176.7-204.4°C (350°F-400°F), 204.4-232.2°C (400°F-450°F), 232.2-260°C (450°F-500°F), 260-287.8°C (500°F-550°F), 287.8-315.6°C (550°F-600°F), 315.6-343.3°C (600°F-650°F), 343.3-371.1°C (650°F-700°F), 371.1-398.9°C (700°F-750°F), and 393.9-426.7 (750°F-800°F). In other embodiments, the temperature at the transition zone of the injection molder can be at least 204.4°C (400°F), at least 260°C (500°F), at least 315.6°C (600°F), at least 371.1°C (700°F), or at least 426.7°C (800°F). Further still, in some embodiments the temperature at the transition zone 248 of the injection molder can range between the provided ranges in Table B above.

The temperature at the metering zone 250 of the injection molder can range between 176.7-426.7°C (350°F-800°F). In some embodiments, the temperature at the metering zone 250 of the injection molder can range between, 176.7-204.4°C (350°F-400°F), 204.4-232.2°C (400°F-450°F), 232.2-260°C (450°F-500°F), 260-287.8°C (500°F-550°F), 287.8-315.6°C (550°F-600°F), 315.6-343.3°C (600°F-650°F), 343.3-371.1°C (650°F-700°F), 371.1-398.9°C (700°F-750°F), and 398.9-426.7°C (750°F-800°F). In other embodiments, the temperature at the metering zone 250 of the injection molder can be at least 204.4°C (400°F), at least 260°C (500°F), at least 315.6°C (600°F), at least 371.1°C (700°F), or at least 426.7°C (800°F). Further still, in some embodiments the temperature at the metering zone 250 of the injection molder can range between the provided ranges in Table B above.

The temperature at the screw tip 252 of the injection molder can range between 176.7-426.7°C (350°F-800°F). In some embodiments, the temperature at the screw tip 252 of the injection molder can range between, 176.7-204.4°C (350°F-400°F), 204.4-232.2°C (400°F-450°F), 232.2-260°C (450°F-500°F), 260-287.8°C (500°F-550°F), 287.8-315.6°C (550°F-600°F), 343.3°C (600°F-650°F), 343.3-371.1°C (650°F-700°F), 371.1-398.9°C (700°F-750°F), and 398.9-426.7°C (750°F-800°F). In other embodiments, the temperature at the screw tip 252 of the injection molder can be at least 204.4°C (400°F), at least 260°C (500°F), at least 315.6°C (600°F), at least 371.1°C (700°F), or at least 426.7°C (800°F). Further still, in some embodiments the temperature at the screw tip 252 of the injection molder can range between the provided ranges in Table B above.

The temperature of the mold 200 can range between -17.8-204.4°C (0°F-400°F). In some embodiments, the temperature at the mold 200 of the injection molder can range between, - 17.8-10°C (0°F-50°F), 10-37.8°C (50°F-100°F), 37.8-65.6°C (100°F-150°F), 65.6-93.3°C (150°F-200°F), 93.3-121.1°C (200°F-250°F), 121.1-148.9°C (250°F-300°F), 148.9-176.7°C (300°F-350°F), or 176.7-204.4°C (350°F-400°F). In other embodiments, the temperature of the mold 200 can be at least, -17.8°C (0°F), at least 37.8°C (100°F), at least 93.3°C (200°F), or at least 148.9°C (300°F). Further still, in some embodiments the temperature of the mold 200 can range between the provided ranges in Table B above. The mold 200 can be kept at a temperature below the melting point of the composite material so that the molten composite material solidifies in the mold 200. The mold 200 can further comprise cooling lines to maintain the mold 200 at the desired temperature.

### Injecting the Composite Material into the Mold

Once the composite material is heated, the screw tip 252 injects or dispenses the molten composite into the desired mold 200. When the molten composite is injected into the mold 200, the molten composite material flows around the center ballast 216, and the slide fork 232 and down into the bottom reservoir 214, and up into the top reservoir 208. This forms the rounded or clamshell shape of the wrap-around component 100 (the composite material "wraps around" or flows around the center ballast 216 and fork 232). The crown section 110 of the wrap-around component 110 is partially formed before the toe and heel wings 130, 150 begin to form.

Although the above-described mold 200 is designed to form a single wrap-around component 100, the mold 200 can also be designed to simultaneously form two, three, four, five, or six wrap-around components. For example, FIGS. 26-29 illustrate pathlines of material flow within a part that is formed in a mold having two cavities for the simultaneous formation of two wrap-around components. As illustrated, the sprue feeds material from the injection molder compression screw into two gates, one for each wrap-around component being formed.

The pressure and speed at which the composite material is dispensed into the mold 200 is equally as important as the temperature and direction of the composite material, in order to achieve a strong wrap-around component 100. The pressure of the injection molder is hydraulically applied from the back of the injection molder into the compression screw 244. The speed of the injection molder is the speed at which the composite material exits the screw tip 252. The pressure and speed help ensure that the composite material flows evenly through the mold, filling the entire mold cavity 226.

In most embodiments, the injection pressure of the composite material through the injection molder can range between 0-689.5 kPa (0-100 psi). In some embodiments, the injection pressure of the composite material through the injection molder can range from 0-69.0 kPa (0-10 psi), 69.0-137.9 kPa (10-20 psi), 137.9-206.8 kPa (20-30 psi), 206.8-275.8 kPa (30-40 psi), 275.8-344.7 kPa (40-50 psi), 344.7-413.7 kPa (50-60 psi), 413.7-482.6 kPa (60-70 psi), 482.6-551.6 kPa (70-80 psi), 551.6-620.5 kPa (80-90 psi), or 620.5-689.5 kPa (90-100 psi). In other embodiments, the injection pressure of the composite material through the injection molder can be at least 69.0 kPa (10 psi), at least 137.9 kPa (20 psi), at least 206.8 kPa (30 psi), at least 275.8 kPa (40 psi), at least 344.7 kPa (50 psi), at least 413.7 kPa (60 psi), at least 482.6 kPa (70 psi), at least 551.6 kPa (80 psi), or at least 620.5 kPa (90 psi). Five example polymers, Nylon 66, Nylon 6, PP, TPU, and PES, used in various embodiments of wrap-around components for the golf club head, can require an injection pressure range of 172.4-344.7 kPa (25-50 psi). In most embodiments, the injection speed of the composite material through the injection molder can range between 0.254 cm/s (0.1 in/s) and 25.4 cm/s (10 in/s). In some embodiments, the injection speed of the composite material through the injection molder can range from 0.254-2.54 cm/s (0.1-1 in/s), 2.54-5.08 cm/s (1-2 in/s), 5.08-7.62 cm/s (2-3 in/s), 7.62-10.16 cm/s (3-4 in/s), 10.16-12.7 cm/s (4-5 in/s), 12.7-15.24 cm/s (5-6 in/s), 15.24-17.78 cm/s (6-7 in/s), 17.78-20.32 cm/s (7-8 in/s), 20.32-22.86 cm/s (8-9 in/s), or 22.86-25.4 cm/s (9-10 in/s). In other embodiments, the injection speed of the composite material through the injection molder can be at least 0.254 cm/s (0.1 in/s), at least 2.54 cm/s (1 in/s), at least 5.08 cm/s (2 in/s), at least 7.62 cm/s (3 in/s), at least 10.16 cm/s (4 in/s), at least 12.7 cm/s (5 in/s), at least 15.24 cm/s (6 in/s), at least 17.78 cm/s (7 in/s), at least 20.32 cm/s (8 in/s), or at least 22.86 cm/s (9 in/s). Five example polymers, Nylon 66, Nylon 6, PP, TPU, and PES, used in various embodiments of wrap-around components for the golf club head, can require an injection speed range of 5.08-7.62 cm/s (2-3 in/s).

### Ejecting the Wrap-around Component

After the composite material is injected into the mold to form the wrap-around component 100, the wrap-around component 100 is ejected from the injection molder. In reference to FIG. 24, the top mold half 202 is removed from the bottom mold half 212, and the slide 230 is removed, leaving the wrap-around component 100 positioned around the bottom mold half center ballast 216. Without the bottom mold half center ballast 216, the slide 230 would not be able to retract without pulling the wrap-around component 100 away from the mold cavity 226. The bottom mold half center ballast 216 prevents the wrap-around component 100 from moving when the slide 230 is retracted. The at least one ejector pin 218 of the bottom mold half center ballast 216 subsequently extends from the center ballast 216 pushing the wrap-around component 100 out of the mold 200, completing the injection molding process.

In some embodiments of the method, the injection molding step can further comprise cutting off the sprue 204 and gate material 206 that remains attached to the unfinished wrap-around component after the injection molding process. The area where the gate 206 was attached can be sanded, ground, polished, or otherwise finished to give the wrap-around component 100 its desired shape. In general, to further conceal any blemishes leftover from injection molding process, the mold 200 can be designed with the gate in a location that will be less visible on the final club head 10. For example, in the embodiment described above, locating the gate 206 at the rear peripheral edge 116 of the crown section 110 instead of on a flat surface makes the gate cutoff less visible when the club head 10 is in the address position.

The full injection molding step can be completed in an amount of time known as the cycle time. In embodiments where the mold 200 comprises more than one cavity 226 for forming more than one wrap-around component 100 simultaneously, a part production speed is determined by dividing the cycle time by the number of components produced within one cycle. The cycle time can range between 20 seconds to 120 seconds. In some embodiments, the cycle time ranges between 20 seconds and 60 seconds, between 30 seconds and 60 seconds, between 40 second and 60 seconds, between 60 seconds and 90 seconds, between 70 seconds and 90 seconds, or between 100 seconds and 120 seconds.

### 4) Plasma Treating the Wrap-around Component

Once the wrap-around component 100 is formed, through injection molding, the wrap-around component 100 is plasma treated, to improve the surface energy of the part. The plasma treatment comprises a reactive treatment of the component, wherein positive and negative ions, electrons, and radicals react and collide (in a vacuum) along the surface of the component, thereby eliminating any foreign objects from the surface and increasing the surface energy of the component (roughening the surface). Increasing the surface energy microscopically changes the surface of the wrap-around component, thus increasing the ability to adhere or bond to other materials (*i.e.*, the main component). This treatment not only cleans the wrap-around component 100 but makes it easy to secure to the main component in the following step.

### 5) Joining the Wrap-Around Component and the Main Component

Following the plasma treatment of the wrap-around component 100, the wrap around component 100 and main component 60 can be joined to form the golf club head 10. Joining the wrap-around component 100 to the main component 60 requires applying adhesive to the lip 80 of the main component 60 and sliding the wrap-around component 100 over the main component 60. The lip of the wrap-around component 100 can overlap and bond to the lip 80 of the main component 60. The ability of the wrap-around component 100 to be aligned and joined to the main component 60 is partially dependent on the type of composite material that is used to form the wrap-around component 100. With certain composite materials, the toe and heel wings 130, 150 can be bent or deflected without breaking. In some embodiments, this flexibility allows the wrap-around component 100 to be slightly distorted to fit over the lip 80 of the main component 60.

The bonding step can further comprise allowing the adhesive to dry. In other embodiments, the wrap-around component 100 can be mechanically fastened to the main component 60, epoxied to the main component, or any other suitable method of permanently affixing the wrap-around component 100 to the main component 60.

### 6) Finishing the Golf Club Head

Once the main component 60 is joined to the wrap-around component 100, the golf club head 10 is finished. This step can comprise polishing, cleaning, coating, and/or painting the club head 10. In some embodiments, this can include adding a removable/detachable weight to the golf club head 10 or adding embossed lettering and/or logos to the golf club head 10.

As the rules to golf may change from time to time (e.g., new regulations may be adopted or old rules may be eliminated or modified by golf standard organizations and/or governing bodies), golf equipment related to the methods, apparatus, and/or articles of manufacture described herein may be conforming or non-conforming to the rules of golf at any particular time. Accordingly, golf equipment related to the methods, apparatus, and/or articles of manufacture described herein may be advertised, offered for sale, and/or sold as conforming or non-conforming golf equipment. The methods, apparatus, and/or articles of manufacture described herein are not limited in this regard.

Although a particular order of actions is described above, these actions may be performed in other temporal sequences. For example, two or more actions described above may be performed sequentially, concurrently, or simultaneously. Alternatively, two or more actions may be performed in reversed order. Further, one or more actions described above may not be performed at all. The apparatus, methods, and articles of manufacture described herein are not limited in this regard.

## Claims

1. A golf club head (10) comprising:
a front end (12), a rear end (14), a crown (16), a sole (18), a skirt (24) connecting the crown to the sole, a toe end (20), and a heel end (22);
a main component (60) comprising a strikeface (62), a return (64) extending rearward from the strikeface, and a sole extension (72) stretching from the return to the rear end;
wherein the main component forms a first crown portion, a first sole portion, a toe end, and a heel end;
wherein the sole extension further comprises a width measured parallel to an X-axis, ranging from 25% to 85% of the maximum club head width and a weight channel (82) configured to receive a weight (84); a wrap-around component (100) that attaches to the main component to form the golf club head; the wrap-around component is formed of a composite material having fibers aligned in a front-to-rear direction and comprises a second crown portion (110), a toe wing (130), and a heel wing (150);
wherein:
the toe wing and heel wing are integral with the second crown portion and form portions of the sole;
the wrap-around component comprises thickened portions (118) and a thinned region that runs around a peripheral edge of the wrap-around component;
a coordinate system comprising:
an origin (30) at a strikeface center of the strikeface;
the X-axis (32) extending through the strikeface center in a direction from the heel end to the toe end;
a Y-axis (34) extending through the strikeface center in a direction from the crown to the sole;
a Z-axis (36) extending through the strikeface center in a direction from the strikeface to the rear end; and
a sole extension axis (88) that:
(a) approximates a center of the sole extension and is parallel to an YZ plane; or
(b) approximates a center of the sole extension and intersects with an YZ plane at an extension angle that ranges from 0 degrees to 45 degrees.

2. The golf club head (10) of claim 1, wherein the return (64) and sole extension (72) of the main component (60) are integrally formed from a first metallic material; and the strikeface (62) is a faceplate formed from a second metallic material and secured within a front cavity of the main component.

3. The golf club head (10) of any one of claims 1 to 2,
the wrap-around component (100) comprises a composite material comprising a polymer resin and a reinforcing fiber;
the polymer resin is a material selected from the group consisting of: a thermoplastic polyurethane (TPU) and a thermoplastic elastomer (TPE);
the reinforcing fiber is a material selected from the group consisting of: carbon fibers,
glass fibers, and graphine fibers; and
the reinforcing fiber makes up between 10% and 60% of a weight of the wrap-around component.

4. The golf club head (10) of claim 3,
the composite material comprises a tensile strength of greater than about 110 MPa; and
the composite material comprises a tensile modulus between about 26,000 MPa and about 30,000 MPa.

5. The golf club head (10) of any one of claims 1 to 4, wherein the wrap-around component (100) further comprises an inner surface (104), an outer surface (102), and a thickness of the wrap-around component is defined as the distance between the outer surface and the inner surface; and the wrap-around component has a thickness that ranges between 0.076 cm and 0.114 cm (0.030 inch and 0.045 inch).

6. The golf club head (10) of any one of claims 1 to 5, wherein the main component (60) comprises a t-shape when viewed from the crown (16).

7. The golf club head (10) of any one of claims 1 to 6, wherein the return (64) comprises a return thickness measured orthogonal to an XY plane wherein the return depth (68) is between 0.381 cm and 1.016 cm (0.15 and 0.40 inches).

8. The golf club head (10) of any one of claims 1 to 7, wherein the golf club head comprises a club head depth (56) measured from the furthest most extent of the club head from the front end (12) to the rear end (14) in a direction parallel to the z-axis; and wherein the depth is between 5.08 cm and 12.7 cm (2 inches and 5 inches).

9. The golf club head (10) of claim 8, wherein a ratio of a return depth (68) to the club head depth (56) is between 0.20 and 0.50.

## Patentansprüche

1. Golfschlägerkopf (10), umfassend:
ein vorderes Ende (12), ein hinteres Ende (14), eine Krone (16), eine Sohle (18), einen Rand (24), der die Krone mit der Sohle verbindet, ein Zehenende (20) und ein Fersenende (22);
eine Haupt-Komponente (60) mit einer Schlagfläche (62), einer Rückführung (64), die sich von der Schlagfläche aus nach hinten erstreckt, und einer Sohlenverlängerung (72),
die sich von der Rückführung zum hinteren Ende erstreckt;
wobei die Haupt-Komponente einen ersten Kronenabschnitt, einen ersten Sohlenabschnitt, ein Zehenende und ein Fersenende bildet;
wobei die Sohlenverlängerung ferner eine parallel zu einer X-Achse gemessene Breite, die zwischen 25 % und 85 % der maximalen Schlägerkopfbreite liegt, und einen Gewichtskanal (82) umfasst, der zur Aufnahme eines Gewichts (84) konfiguriert ist;
eine Umhüllungs-Komponente (100), die an der Haupt-Komponente befestigt ist, um den Golfschlägerkopf zu bilden;
wobei die Umhüllungs-Komponente aus einem Verbundmaterial gebildet ist, weiches Fasern enthält, die in einer Richtung von vorn nach hinten ausgerichtet sind, und einen zweiten Kronenabschnitt (110), einen Zehenflügel (130) und einen Fersenflügel (150) umfasst;
wobei
der Zehenflügel und der Fersenflügel integrale Bestandteile des zweiten Kronenteils sind und Teile der Sohle bilden;
die Umhüllungs-Komponente verdickte Teile (118) und einen verdünnten Bereich umfasst, der um eine Umfangskante der Umhüllungs-Komponente verläuft;
wobei ein Koordinatensystem Folgendes umfasst:
einen Ursprung (30) in dem Schlagflächen-Zentrum der Schlagfläche;
wobei die X-Achse (32) sich durch das Zentrum der Schlagfläche in einer Richtung vom Fersenende zum Zehenende erstreckt;
wobei eine Y-Achse (34) sich durch das Zentrum der Schlagfläche in einer Richtung von der Krone zur Sohle erstreckt;
wobei eine Z-Achse (36) sich durch das Zentrum der Schlagfläche in einer Richtung von der Schlagfläche zum hinteren Ende erstreckt; und
eine Sohlen-Verlängerungsachse (88)vorgesehen ist, die:
(a) sich einem Zentrum der Sohlen-Verlängerung annähert und parallel zu einer YZ-Ebene verläuft; oder
(b) sich einem Mittelpunkt der Sohlen-Verlängerung annähert und eine YZ-Ebene in einem Verlängerungswinkel von 0 Grad bis 45 Grad schneidet.

2. Golfschlägerkopf (10) nach Anspruch 1, wobei die Rückführung (64) und die Sohlen-Verlängerung (72) der Hauptkomponente (60) einstückig aus einem ersten metallischen Material gebildet sind und die Schlagfläche (62) eine aus einem zweiten metallischen Material gebildete und in einem vorderen Hohlraum der Haupt-Komponente befestigte Frontplatte ist.

3. Golfschlägerkopf (10) nach einem der Ansprüche 1 bis 2,
wobei die Umhüllungs-Komponente (100) ein Verbundmaterial umfasst, das ein Polymerharz und eine Verstärkungsfaser umfasst;
wobei das Polymerharz ein Material ist, das aus der Gruppe ausgewählt ist, die aus einem thermoplastischen Polyurethan (TPU) und einem thermoplastischen Elastomer (TPE) besteht;
wobei die Verstärkungsfaser ein Material ist, das aus der Gruppe ausgewählt ist, die aus Kohlenstofffasern, Glasfasern und Graphen-Fasern besteht; und
wobei die Verstärkungsfaser zwischen 10 % und 60 % des Gewichts der Umhüllungs-Komponente ausmacht.

4. Golfschlägerkopf (10) nach Anspruch 3,
wobei das Verbundmaterial eine Zugfestigkeit von mehr als etwa 110 MPa aufweist und das Verbundmaterial einen Zugmodul aufweist, der zwischen etwa 26.000 MPa und etwa 30.000 MPa liegt.

5. Golfschlägerkopf (10) nach einem der Ansprüche 1 bis 4,
wobei die Umhüllungs-Komponente (100) ferner eine innere Fläche (104) und eine äußere Fläche (102) umfasst, und wobei die Dicke der umlaufenden Komponente als der Abstand zwischen der äußeren Fläche und der inneren Fläche definiert ist; und wobei die umlaufende Komponente eine Dicke im Bereich zwischen 0,076 cm und 0,114 cm (0,030 Zoll und 0,045 Zoll) aufweist.

6. Golfschlägerkopf (10) nach einem der Ansprüche 1 bis 5, wobei die Haupt-Komponente (60), von der Krone (16) aus gesehen, eine T-Form aufweist.

7. Golfschlägerkopf (10) nach einem der Ansprüche 1 bis 6, wobei die Rückführung (64) eine Rückführungs-Dicke aufweist, die orthogonal zu einer XY-Ebene gemessen wird, wobei die Rückführungs-Tiefe (68) zwischen 0,381 cm und 1,016 cm (0,15 und 0,40 Zoll) liegt.

8. Golfschlägerkopf (10) nach einem der Ansprüche 1 bis 7, wobei der Golfschlägerkopf eine Schlägerkopf-Tiefe (56) aufweist, die vom äußersten Punkt des Schlägerkopfes vom vorderen Ende (12) zum hinteren Ende (14) in einer Richtung parallel zur z-Achse gemessen wird; und wobei die Tiefe zwischen 5,08 cm und 12,7 cm (2 Zoll und 5 Zoll) liegt.

9. Golfschlägerkopf (10) nach Anspruch 8, wobei das Verhältnis der Rückführungs-Tiefte (68) zur Schlägerkopf-Tiefe (56) zwischen 0,20 und 0,50 liegt.

## Revendications

1. Une tête (10) de club de golf comprenant :
une extrémité (12) avant, une extrémité (14) arrière, une couronne (16), une semelle (18), une jupe (24) reliant la couronne à la semelle, une extrémité (20) de pointe et une extrémité (22) de talon ;
un composant (60) principal comprenant une face (62) de frappe, un retour (64) s'étendant vers l'arrière à partir de la face de frappe et un prolongement (72) de la semelle s'étendant du retour à l'extrémité arrière ;
dans laquelle le composant principal forme une première partie de la couronne, une première partie de la semelle, une extrémité de pointe et une extrémité de talon ;
dans laquelle le prolongement de la semelle comprend en outre une largeur mesurée parallèlement à un axe X, représentant de 25 % à 85 % de la largeur maximum de la tête du club et un canal (82) de masselotte, configuré pour recevoir une masselotte (84) ;
un composant (100) enveloppant, qui se fixe au composant principal pour former la tête du club de golf ;
le composant enveloppant est en un matériau composite ayant des fibres alignées dans une direction avant à arrière et comprend une deuxième partie (110) de couronne, une aile (130) de pointe et une aile (150) de talon ;
dans laquelle :
l'aile de pointe et l'aile de talon sont d'une pièce avec la deuxième partie de la couronne et forment des parties de la semelle ;
le composant enveloppant comprend des parties (118) épaissies et une région amincie, qui court autour d'un bord périphérique du composant enveloppant ;
un système de coordonnée comprenant :
une origine (30) à un centre de la face de frappe ;
l'axe X (32) passant par le centre de la face de frappe dans une direction allant de l'extrémité de talon à l'extrémité de pointe ;
un axe Y (34) passant par le centre de la face de frappe dans une direction allant de la couronne à la semelle ;
un axe Z (36) passant par le centre de la face de frappe dans une direction allant de la face de frappe à l'extrémité arrière ; et
un axe (88) de prolongement de semelle qui :
(a) est une approximation d'un centre du prolongement de la semelle et est parallèle à un plan YZ ; ou
(b) est une approximation d'un centre du prolongement de la semelle et est en intersection avec un plan YZ à un angle de prolongement qui va de 0 degrés à 45 degrés.

2. La tête (10) de club de golf de la revendication 1, dans laquelle le retour (64) et le prolongement (72) de la semelle du composant (60) principal sont formés d'une seule pièce en un premier matériau métallique et la face (62) de frappe est une plaque de face en un deuxième matériau métallique et est fixée dans une cavité avant du composant principal.

3. La tête (10) de club de golf de l'une quelconque des revendications 1 à 2,
le composant (100) enveloppant comprend un matériau composite comprenant une résine polymère et une fibre de renfort ;
la résine polymère est un matériau choisi dans le groupe consistant en : un polyuréthane (TPU) thermoplastique et un élastomère (TPE) thermoplastique ;
la fibre de renfort est un matériau choisi dans le groupe consistant en : des fibres de carbone, des fibres de verre et des fibres de graphène ; et
la fibre de renfort représente entre 10 % et 60 % d'un poids du composant enveloppant.

4. La tête (10) de club de golf de la revendication 3,
dans laquelle le matériau composite a une résistance à la traction plus grande qu'environ 110 MPa ; et
le matériau composite a un module de traction compris entre environ 26 000 MPa et environ 30 000 MPa.

5. La tête (10) de club de golf de l'une quelconque des revendications 1 à 4, dans laquelle le composant (100) enveloppant comprend en outre une surface (104) intérieure, une surface (102) extérieure et une épaisseur du composant enveloppant est définie comme la distance entre la surface extérieure et la surface intérieure ; et le composant enveloppant a une épaisseur qui est comprise entre 0,076 cm et 0,114 cm (0,030 pouce et 0,045 pouce).

6. La tête (10) de club de golf de l'une quelconque des revendications 1 à 5, dans laquelle le composant (60) principal comprend une forme en t telle que vue à partir de la couronne (16).

7. La tête (10) de club de golf de l'une quelconque des revendications 1 à 6, dans laquelle le retour (64) a une épaisseur de retour mesurée orthogonalement à un plan XY, dans laquelle la profondeur (68) de retour est comprise entre 0,381 cm and 1,016 cm (0,15 et 0,40 pouce).

8. La tête (10) de club de golf de l'une quelconque des revendications 1 à 7, dans laquelle la tête du club de golf comprend une profondeur (56) de tête de golf mesurée de l'étendue la plus loin de la tête de club de l'extrémité (12) avant et l'extrémité (14) arrière dans une direction parallèle à l'axe Z ; et dans laquelle la profondeur est comprise entre 5,08 cm et 12,7 cm (2 pouces et 5 pouces).

9. La tête (10) de club de golf de la revendication 8, dans laquelle un rapport de la profondeur (68) du retour à la profondeur (56) de la tête du club est comprise entre 0,20 et 0,50.
